# EUROPEAN PATENT APPLICATION

(11) **EP 3 923 231 A1**
(43) Date of publication of application: **15.12.2021**
(21) Application number: 20179419.5
(22) Date of filing: 11.06.2020
(51) Int. Cl.: G06Q 50/02

(54) **METHOD AND SYSTEM FOR MANAGING AGRICULTURAL PROCESSES**

(71) Applicant: KWS SAAT SE & Co. KGaA, 37574 Einbeck (DE)
(72) Inventor: Scheuermann, Enrico B., 37574 Dassensen (DE); Ratke, Christoph, 37181 Hardegsen (DE); Wray, Christopher, 37574 Einbeck (DE); Quantmeyer, Christian, 37581 Bad Gandersheim (DE); Stoffregen, Jan-Patrick, 31079 Sibbesse (DE)
(74) Representative: Eisenführ Speiser

(57) **Abstract**

The invention relates to a method and system for managing agricultural processes. The method comprises creating a field management unit by defining georeferenced boundaries of the field management unit, creating a layout of the field management unit by defining georeferenced field management sub-units within the field management unit, storing the field management unit, including its boundaries and its field management sub-units, in a geospatial database provided on a server, attributing site characteristics to the field management unit, in particular to the field management sub-units, attributing plant characteristics to the field management unit, in particular to the field management sub-units, exchanging data relating to the field management unit with at least one sensor platform, performing a task by the at least one sensor platform with respect to the data relating to the field management unit.

## Description

The invention relates to a method for managing agricultural processes and to a system for managing agricultural processes.

The management of agricultural processes, like plant production, in particular hybrid plant production, plant line, plant population or plant variety development including plot research studies, is facing increasing challenges. For example, increasing regulatory requirements, more detailed information and complex interdependencies between different entities as well as high needs for geographical accuracy are creating a demand for improvements of existing solutions.

Existing solutions, as described in US 8,958,992 B2, US 8,417,534 B2, US 9,622,402 B2, EP 3 358 519 A1 and EP 3, 351 968 A1 fall short of these demands and have a number of disadvantages. For example, existing solutions are not accurate enough and do not enable precise performance of tasks in fields.

Thus, there is a need for an improved solution, which addresses at least one of the needs and/or reduces at least one of the disadvantages mentioned above. In particular, it exists a need for a method and system for managing agricultural processes which allow for more effective and/or reliable and/or efficient and/or facilitated management of and/or higher-quality in agricultural processes

According to a first aspect, it is provided a method for managing agricultural processes, comprising creating a field management unit by defining georeferenced boundaries of the field management unit, creating a layout of the field management unit by defining georeferenced field management sub-units within the field management unit, storing the field management unit, including its boundaries and its field management sub-units, in a geospatial database provided on a server, attributing site characteristics to the field management unit, in particular to the field management sub-units, attributing plant characteristics to the field management unit, in particular to the field management sub-units, exchanging data relating to the field management unit with at least one sensor platform, performing a task by the at least one sensor platform with respect to the data relating to the field management unit.

According to the solution and its preferred embodiments described herein also further below, the creation and storage of a field management unit with a layout defining georeferenced field management sub-units in a geospatial database allows for the attribution of site characteristics as well as plant characteristics to this field management unit, in particular its sub-units. In this way, a, preferably multidimensional, data collection can be created which not only comprises information about the geographical location of the field management unit and its sub-units, but also includes information about site characteristics and plant characteristics related thereto and preferably, as will be described also below, further information. This collection of accumulated data can function as a central data hub.

According to the solution and its preferred embodiments described herein, data relating to the field management unit can be exchanged with at least one sensor platform and the at least one sensor platform can perform a task depending on the data relating to the field management unit. In this way, a connection between tasks performed by the at least one sensor platform and the data relating to the field management unit is established. Thus, it is possible to enhance the performance of a task by the at least one sensor platform, e.g. with respect to quality, efficiency, safety, etc., and at the same time also the accumulated data can be enhanced, e.g. with respect to quality, detail, etc. In this way, a better managing agricultural processes can be achieved, which provides an integrated solution for managing agricultural processes through their entire cycle, which will be described in more detail below.

Agricultural processes, as understood herein, and as will be described also further below, can comprise one or several of the following group: placing planting material, such as, but not limited to sowing seeds and/or placing of young plants and/or cuttings and/or bulbs and/or tubers and/or grafts, transplanting planting material, such as, but not limited to young plants and/or cuttings and/or bulbs and/or tubers and/or grafts, singling planting material, such as, but not limited to young plants and/or cuttings and/or bulbs and/or tubers ad/or grafts, topping planting material, such as, but not limited to young plants and/or cuttings and/or bulbs and/or tubers and/or grafts, collecting plant samples, harvesting, inspecting, emasculating, pollination, sampling for genotyping or ingredient analysis, treatment with chemicals and/or fertilizer and/or irrigation, weeding, in particular mechanical weeding, phenotyping.

The process of managing such agricultural processes, as will also be described further below, can comprise one or several of the following group: planning, administrating, performing maintenance work, inspecting, monitoring, documenting, analyzing, evaluating, visualizing.

In managing agricultural processes, the geographical location of plant material is important. For example, in plant production, in particular hybrid plant production, plant line and/or variety development, plant material is located in fields.

Herein, such fields are referred to as field management units.

Herein, plant material is preferably understood as any plant matter, in particular comprising plant matter still to be planted (which is herein preferably referred to as planting material), plant matter located in a field and preferably growing there, and/or plant matter, which has been transferred from a field, for example by harvesting, grafting, sampling for genotyping or ingredient analysis and/or for transplantation.

In the solution and its preferred embodiments described herein, a field management unit is created by defining georeferenced boundaries thereof. This can be done, for example, using a geographic information system (GIS). A GIS can be understood as a system designed to capture, store, manipulate, analyze, manage and/or present a variety of types of spatial and/or geographical data with georeferenced coordinates, in particular latitude and longitude. The boundaries of a field management unit preferably are in the form of the borderlines of a field, which preferably form one circumferentially closed line enclosing the field management unit therein. The geographical location of these boundaries are stored in the geospatial database, for example as a polygon or in the form of connected point coordinates.

As will also be described further below, a field management sub-unit can comprise one or several of the following group: block, plot, stripe, row, sowing line, point location.

The field management sub-units can also be understood as smaller areas which subdivide a larger field management unit. For example, also a hierarchy of field management sub-units within a field management unit can exist.

In particular, the solution and its preferred embodiments described herein are suitable for field management units, in particular field management sub-units, with a relatively small size as used in pre-breeding, breeding and/or plant line, plant population and plant variety development. For these smaller sized field management units, in particular field management sub-units, and the specific requirements of pre-breeding, breeding and/or plant line, plant population or plant variety development, a particularly high accuracy of position data is necessary. For example, different varieties may be placed in small field management sub-units close to each other. In particular, for application areas like pre-breeding, breeding and/or plant line, plant population or plant variety development, it is important to manage agricultural processes on different field management sub-units individually. Thus, exact position data is necessary to differentiate between the individual small field management sub-units and the different lines, populations or varieties placed therein. In particular pre-breeding, breeding and/or plant line, plant population or plant variety development applications, it can even be desirable to differentiate field management sub-units in the form of point coordinates and/or individual plant material, such as, but not limited to, individual seeds and/or individual plants.

Herein, such a small field management sub-unit may also be referred to as a breeding plot or research plot. Preferably, a field management sub-unit, in particular a breeding plot or research plot, has an essentially rectangular shape with an edge length on its larger edge of max. 15 m, or max. 12 m, or max. 10 m, or max. 7.5 m, or max. 5 m, or max. 3 m, or max. 1.5 m, or max. 1.25 m. Preferably, a field management sub-unit, in particular a breeding plot, has an edge length on its shorter edge of max. 3 m, or max. 2 m, or max. 1.5 m, or max. 1.35 m, or max. 1.25 m.

Non-limiting examples of sizes of a field management sub-unit, in particular a breeding plot, are: 3 m x 10 m, e.g. for maize; 1.35 m x 7,5 m, e.g. for Beta vulgaris; 1.25 m x 1 m, e.g. for cereals like wheat, rye or barley.

Preferably, in the definition the size of a field management sub-unit, in particular a breeding plot, parameters, such as but not limited to working width, of an agricultural machine, such as but not limited to sowing machines, foreseen to perform tasks on the field management sub-unit, in particular the breeding plot, are taken into account.

A field management unit may comprise blocks and plots as field management sub-units, for example. Preferably, a plurality of plots forms a block and a plurality of blocks may be present in a field management unit.

Further for example, field management sub-units may be in the form of rows, stripes, sowing lines and/or point locations. For example, a field management sub-unit may comprise several rows, wherein each row comprises one or more sowing lines and wherein each sowing line comprises several lined up point locations.

It is also possible that a field management unit comprises only one single field management sub-unit. In this case, the single field management sub-unit may be identical to the field management unit. The single field management sub-unit may also comprise only a part of the field management unit, for example.

The definition of field management sub-units within a field management unit is referred to as creating a field management layout.

Both the field management unit, in particular its boundaries, as well as the field management sub-units are georeferenced.

Herein, georeferencing preferably means that the boundaries of a field management unit and/or of a field management sub-unit is related to a ground system of geographic coordinates, preferably using a coordinate reference system, which in turn preferably can be related to a geodetic reference system.

Preferably, the georeferenced boundaries of the field management unit and/or field management sub-units are stored in the geospatial database, which preferably also comprises a GIS Web server, such as but not limited to Oracle Esri Enterprise. The GIS Web server preferably hosts web mapping services and/or a GIS-based web application. The geospatial database and/or servers may be hosted internally or in the cloud.

It is further preferred that navigation information, for example in the form of one or more navigations lines, is created, preferably as part of the creation of a field management unit and/or of a layout of the field management unit. A navigation information herein is preferably understood as information which can be used by an agricultural machine and/or by a mobile platform, e.g. a mobile sensor platform, for navigation purposes. In particular, the navigation information may provide a path along which an agricultural machine and/or by a mobile platform is supposed to move.

Further preferably, and as also described further below, the geospatial database may be part of a database system comprising one or more further databases. Further, the server may comprise one or more sub servers and/or be part of a server landscape with several servers and/or sub servers.

The creation of a field management unit and/or of a layout of the field management unit may be performed in different ways. These include, but are not limited to, drawing field management units and/or field management sub-units in a drawing application, uploading geographic information, such as georeferenced boundaries, from GIS files (such as but not limited to an Esri.shp file or Google KML file format), synchronizing geographic information, such as georeferenced boundaries, from a, preferably mobile, GNSS application, and/or copying geographic information, such as georeferenced boundaries, from a field management unit and/or field management sub-units, which was previously defined, for example in the previous year, and has been stored in the geospatial database.

In particular, the creation of a field management unit and its layout including field management sub-units and storing the related georeferenced information in the geospatial database according to the solution and its preferred embodiments described herein allows for further information to be attributed thereto.

According to the present solution, site characteristics and/or plot characteristics and/or block characteristics are attributed thereto. Possibly further attributed information is described further below.

The provision of plant characteristics and/or site characteristics and/or further information to be attributed can be in a variety of ways. For example, a site characteristics database and/or a plant characteristics database and/or one or more further databases may be provided. Further, site and/or plant characteristics and/or further information may be obtained from the at least one sensor platform and/or provided via a user input, uploads, copying, synchronization, download and/or other suitable ways.

Site characteristics in particular are understood as characteristics relating to the site of a field management unit, in particular the field management sub-units. As will also be described below, site characteristics can comprise one or several of the following group: crop sequence, field crop history, slope, surface conditions, soil information, breeder, treatment (such as application of fungicides, herbicides, rodent repellents, bird repellents and/or microbes), harvest type, harvest priority, harvest results, harvest observation data, field name, farmer, trial number, trial class. In particular, the site characteristics may comprise historical information including information about previous use.

As will also be described further below, plant characteristics can comprise one or several of the following group: year, crop, material group, variety name, variety type, variety traits, flowering categories, resistance, general vigor, pedigree, plant component information, crossing history, crossing locational history, in particular comprising place and/or time of crossing, male/female lines, regulatory restrictions, component information, disease management information, risk management factors, genetic identification, randomization type, number of replications, number of entries, number of plants. In particular, plant characteristics may be provided by creating a connection to a plant characteristics database, which can also be referred to as a breeding database and/or a production database. These databases may include commercial database systems such as but not limited to Oracle and SAP. For example, a user can select certain information in the plant characteristics database and attribute it to a field management sub-unit. In this way, specific information relating to plant characteristics can be linked spatially to a field management unit and its sub-units.

Exchanging data relating to the field management unit with at least one sensor platform preferably comprises transmitting data to the at least one sensor platform and/or receiving data from the at least one sensor platform. Preferably, a bidirectional information exchange is possible.

Performing a task by the at least one sensor platform depending on the data relating to the field management unit may comprise performing a task by the at least one sensor platform depending on data relating to the field management unit that was transmitted to and/or received by the at least one sensor platform. Further preferably, performing a task by the at least one sensor platform may comprise performing a task depending on data relating to the field management unit, before this data is transmitted from the at least one sensor platform, preferably to the database.

In general, a task performed by the at least one sensor platform may be any task relating to information, in particular collection of information, and/or agricultural processes, in particular any measures that need to be carried out in an agricultural process.

The solution and its preferred embodiments described herein also further below, as a number of advantages, such as but not limited to the ones described in the following. Advantageously, a single ecosystem is provided with a central geospatial database and a web-based server, preferably containing relational information in a multidimensional matrix. The solution advantageously and preferably comprises a plotter module for field management sub-unit (e.g. block/plot) layout planning and allows for easy, traceable and instant documentation. Further advantageously and preferably, the solution and its preferred embodiments described herein allows in-field layout capture of data, in-field inspections and treatment as well as in-field mobile applications. Further advantageously and preferably, the solution and its preferred embodiments described herein are suitable for GNSS enabled machines and/or sensors and/or allows for quality control/compliance documentation and checks. With the solution and its preferred embodiments described herein, advantageously and preferably, information can be transmitted to mobile (sensor) platforms and/or steering signals can be provided to (sensor) platforms.

In this way, advantageously and preferably, a digital geospatial hub and method for planning and managing breeding related in-field seed production processes can be provided. Further advantageously and preferably, the efficiency and quality of breeding related seed production can be improved through i) the adoption of novel digital technologies, ii) increased documentation needs, iii) temporal and spatial track and traceability of genetics in the field, iv) collection of environmental data, and thus some of the major challenges plant breeding is facing in the 21st century can be addressed.

A further advantage is, that preferably, a cross-crop geospatial computer system (also referred to as hub) and a method to create, record and document seed production activities within the breeding cycle is provided. The system advantageously and preferably, provides for the planning, realization, management and documentation of in-field processes during the complete life cycle of a breeding related seed production field (pre-season, in-season and post-season). For example, detailed production layouts can be spatially planned with linked genotype information and/or phenotype information, the realized layouts recorded during planting and imported into the system. The system advantageously and preferably, functions as a geospatial hub which stores seed production fields and accompanying data in a geospatial database with real world coordinates (as opposed to Excel layouts) and further advantageously and preferably, serves as a basis for autonomous processes with the resultant increase of quality and efficiency of related processes.

In this way, advantageously and preferably, the solution and its preferred embodiments described herein provides for a single spatially based computer system and method for the planning, realization and management of in-field breeding related seed/plant production processes. Advantageously and preferably, the system has components including one or more of the following: central geodatabase and web-based server, GIS based web application, seed/plant production block/plot layout planning and documentation system, in-field seed/plant production layout capture, in-field mobile application, in-field inspections, treatments, harvest/post-harvest documentation, in-field mobile applications, GNSS enabled machine applications and sensors, quality control/compliance documentation and checks, dashboard and spatial visualization, support system for decision making.

The solution and its preferred embodiments described herein are, inter alia, based on the finding that the planning for breeding related seed production has been traditionally performed with a diverse range of different software packages, including the creation of seed production layouts in Excel spreadsheets. In existing solutions, an overview of what genotype is located where is often only on a field level. These layout plans in existing solutions were not spatially referenced to a coordinate system or geospatially recorded in a GIS (Geographical Information System). Seed/plant production layouts in existing solutions were captured on paper in the field during planting, grafting or transplanting and later in the office transferred to Excel plans, leading to errors such as genotypes assigned to the incorrect position in the field. A further limitation of traditional seed/plant production planning processes in existing solutions is that field documentation, such as treatments applied to a field, was saved in different formats and systems, or in some cases, documented on paper and not centrally aggregated or stored.

The solution and its preferred embodiments described herein, preferably and for example, provides a process of changing a status of a field management sub-unit from new to in-planning, planned, planted and harvested. This process preferably triggers an automated information flow for use in other connected databases, such as but not limited to breeding seed/plant production databases, and preferably sending information such as real world coordinates of field management sub-units and sowing/planting dates to the databases, such as but not limited to breeding seed/plant production databases.

Further preferred and advantageous non-limiting aspects of the solution and its preferred embodiments described herein are spatial/temporal planning; establishment and management of seed/plant production field management units and/or seed/plant production field management sub-units; planning seed production layouts in a GIS system with real world coordinates and dimensions, with the possibility to determine the exact seed/plant production (and number of plants) that can fit in the field management units and/or field management sub-units; sown/planted seed/plant production layouts can be captured during sowing/planting and converted into layout plans; in-field spatial check of correct genotype/genetic population placed in the correct planned plot during sowing/planting, i.e. matching the plan linked to the genotype/genetic population versus the information of plant characteristics of the genotype / genetic population which are provided preferably in the form of a machine-readable code, more preferably an RFID tag or a bar code or a QR code, on the bag containing the plants to be planted; the exact positions of seed/plant production genotypes/genetic populations can be planned and mapped; spatially based quality control and compliance system for seed/plant production; standardized plans and documentation across departments, crops and regions; aggregated view of all seed/plant production activities; completely integrated system for the digital spatial planning and documentation of all in-field processes during the entire seed/plant production cycle.

A particular advantage of the solution and its preferred embodiments described herein is that a single central spatially based system for the planning and documentation of in-field seed production processes can be provided. For example the exact position of each genotype in the field is stored ensuring for spatial temporal track and traceability. In this way, advantageously and preferably, not only compliance and quality information can be centrally stored and aggregated for each field on a variety of spatial levels of field management units and/or field management sub-units, but the solution and its preferred embodiments described herein preferably provides a spatial track and traceability through the exact absolute real world position of the genotype/genetic population in the field, as in existing solutions the position was only recorded within a layout in an Excel spreadsheet or non-spatial database.

In the following, non-limiting advantageous examples for application of the solution and its preferred embodiments described herein are given.

With regard to documentation, non-limiting advantageous examples are the following. Preferably, documents in various formats such as word documents and photos can also be directly uploaded and linked to a field management unit. Further preferably, all documents are stored in a database, with broader access for all users with the appropriate rights and roles. Preferably, documents saved at a breeding station or farmer level, are available across field management units linked to those stations or farmers. These could include lease agreements and Rules guidelines and procedure documents (such as work instructions). Further preferably, when seed production activities with specific classes such as GMO (Genetically Modified Organism) material are linked to a field management unit and/or field management sub-unit, or identified on a field management unit and/or field management sub-unit, documents such as Standard Operating Procedures (SOP) or quality control instructions, are automatically available for this field management unit and/or field management sub-unit.

With regard to planting, non-limiting advantageous examples are the following. Preferably, the tracks and further machine derived data, e.g. speed, singulation, etc., may also be sent to the central system so that planting can be monitored in real time.

With regard to sowing/planting, non-limiting advantageous examples are the following. Preferably, the real time tracking information may be visualized in a dashboard, which provides various graphical and spatial visualizations of the complete seed/plant production cycle. Further preferably, a field summary gives an overview of the number of fields, area and statistics at a block and plot level, while an overview of treatments and inspections are listed. Preferably, a summary of harvest results is also provided in the form of maps and spatially linked graphs. Further preferably, the results from various years of harvest results can be compared. Further preferably, other environmental information such as historical, current and future weather and soil conditions are also included in the dashboard. Preferably, a geospatial visualization of inspections, as well as the visualization of subsequent warnings linked to inspections. For example, if a flowering note is captured, the field may be marked red for a specified period of time to warn other users not to enter the field if they have visited other flowering fields to avoid cross contamination.

With regard to plant line, plant population and plant variety development, non-limiting advantageous examples of processes are the following. Identification and selection of suitable fields, planning of field management units and/or field management subunits, preferably based on and/or taking into account information from the breeders and/or from a breeding database, sowing seeds, transplanting, grafting, dedicated isolation, singling, topping, sampling for genotyping or ingredient analysis, collection of plant observation and rating data, Rouging/selection of plants, collecting plant samples, pollination (natural/manual), agronomic treatments of plants with chemicals, fertilizer, irrigation, mechanical (weeding), phenotyping, sensor data collection, harvesting, analysis and visualization of results.

According to a further preferred embodiment, the method for managing agricultural processes comprises collecting data by the at least one sensor platform, preferably by at least one sensor of the sensor platform, and attributing the collected data to the field management unit, in particular to the field management sub-units.

The data collected by the at least one sensor platform may comprise site characteristics and/or plant characteristics and/or any further information mentioned herein, such as, but not limited to treatment information, observation information, effective planting information, harvest information, post-harvest information, administrative information and/or time information.

Preferably, data collected by the at least one sensor platform may be stored off-line in a memory of the at least one sensor platform and/or transmitted and/or synchronized with a database system and/or a cloud memory. Further preferably, the data collected by the at least one sensor platform may be attributed by an infield spatial system running on the at least one sensor platform. Preferably, the infield spatial system may be a native application running on the at least one sensor platform and preferably may comprise an off-line database, which preferably synchronizes to the central geospatial database. For example, depending on the at least one sensor platform and/or network coverage, the data maybe synchronized in real-time and/or, in particular temporarily, stored off-line, preferably for later synchronization. As an example, synchronizing can be automatic, as soon as a network connection is available and/or initiated manually. Further, data collected by the at least one sensor platform can be transferred in a wireless or wired way, such as, but not limited to, a USB interface for connecting to the memory of a USB memory device.

The data collected by the at least one sensor platform may be attributed directly to the field management unit, in particular the field management sub-units, and/or stored in the geospatial database.

Further preferably, the exact position of the at least one sensor platform while the data is collected and/or the exact time when the data is collected, is comprised in the data and/or also attributed to the field management unit, in particular to the field management sub-units.

Further, data collected by the at least one sensor platform may be attributed to the field management unit, in particular to the field management sub-units, by selecting the respective field management unit, in particular the respective field management sub-units, by a user and linking the data thereto. Further preferably, in particular when the exact position of the at least one sensor platform when the data was collected is known, the attribution to the respective field management unit, in particular to the respective field management sub-units, can be established automatically by comparing the exact position of the at least one sensor platform while the data was collected with the georeferenced information of the field management unit, in particular the field management sub-units.

According to a further preferred embodiment, the steps are carried out for a plurality of field management units.

Preferably, all steps and details described herein with respect to one field management unit also apply to a plurality of field management units.

Further, the steps described herein may be carried out repeatedly and/or in a different order than described herein, with respect to one field management unit and/or with respect to a plurality of field management units.

In particular, the plurality of field management units may relate to a globally distributed plurality of field management units.

According to a further preferred embodiment, the method for managing agricultural processes comprises selecting one out of two or more field management units based on site characteristics and/or plant characteristics attributed to the respective field management units and/or based on selection criteria.

Preferably, the selection of one out of two or more field management units can be carried out at any time, as long as two or more field management units have been defined. Further preferably, more than one field management unit can be selected out of a plurality of field management unit. This can be done by selecting two or more field management units out of a plurality of field management units simultaneously and/or by repeating the selection process. Preferably, a selection module is provided for selecting appropriate field management units.

Preferably, field management units that comply with required selection criteria can be marked as selected. Further preferably, once a field management unit is selected, its status is changed from potential to approved. Further preferably, if a field management unit is attributed to plant characteristics and/or site characteristics which do not match with the required selection criteria, a warning message is generated. Further preferably, field management units that meet the required selection criteria are marked and documented accordingly.

Preferably, selection criteria are defined, for example manually by a user. Selection criteria may comprise, but are not limited to one or several of the following groups: description, priority, appropriate crop, and/or field use. Further, individual and/or several of the site characteristics and are plant characteristics and/or treatment information and more observation information and/or administrative information described herein can be used as selection criteria.

A further selection criteria preferably relates to the georeferenced isolation area also described further below. For example, during the selection process, it is checked whether a georeferenced isolation area of a field management unit to be selected overlaps with any other field management units and/or their respective isolation areas, preferably for the current year or cycle.

Further preferably, a check is also performed with selection criteria relating to geospatial layer information, such as but not limited to, flooding areas, nature reserves, soil or restricted airspace for unmanned aerial vehicle (UAV) flights, in particular to confirm that field management units to be selected are not located in such restricted regions. Preferably, such geospatial layer information can be provided in the form of a geospatial catalogue, preferably provided as a further database, where, based on the location of the field management unit, all layers that intersect with the field management unit can be displayed as map layers.

An example of a quality management system applied to seed/plant production is the Excellence Through Stewardship (ETS) organization that "promotes the universal adoption of product stewardship programs and quality management systems for the full life cycle of agricultural technology products" (https://www.excellencethroughstewardship.org/our-organization). Preferably, various ETS compliance data can be specified during the life cycle of the seed/plant production, such as creating selection criteria and marking each field which complies with the selection criteria.

The purpose of this selection process is in particular to make sure that a field management unit is selected, which complies with certain requirements. For example, in particular in breeding, it can be important that a plurality of field management units is selected, which have similar or even homogeneous features. In this way, the influence of external factors on the development of plant material placed in these field management units and their development is reduced to a minimum.

According to a further preferred embodiment, the method for managing agricultural processes comprises attributing treatment information to the field management unit, in particular to the field management sub-units.

For example, treatment information can include treatment products, which preferably can be provided in a database. treatment information relating to a treatment product can include one or several of the following group: product name, type, registration number, waiting period, standard application rate and/or unit, active ingredients and/or dates of validity. Treatment information can further include target pests and/or contractors.

It is further preferred that treatments applied to a field management unit, in particular its field management sub-units, are documented and/or attributed to the field management unit, in particular its field management sub-units, for example by using a mobile sensor platform. It is further preferred that treatments can be visualized and/or colored according to different treatment parameters, for example flagging fields in red that should not be accessed due to a spray waiting time.

According to a further preferred embodiment, the method for managing agricultural processes comprises attributing observation information to the field management unit, in particular to the field management sub-units.

The observation information may include but may not be limited to notes, manual entries, scores, ratings, such as cleaning, counting, damage, flowering, rouging, selection, general notes, photos, pictures, scans, sensor readings, plant height, plant damage, water content, sugar content, leaf size, leaf area, biomass, shape, plant habitus, stay green, snapping, weight, plant damage, disease monitoring (e.g. insect, spore traps), flowering, status, vigour, number of plants, invasive plants, bolters, environmental parameters, machine/implement recorded values.

For example, observation information in the form of digital field notes can be gathered on the plants by a user with a mobile sensor platform running an offline version of the system, which is connected to a GNSS device, preferably a rover unit as described herein.

According to a further preferred embodiment, the method for managing agricultural processes comprises attributing effected planting information to the field management unit, in particular to the field management sub-units. Effected planting information preferably comprise the position of the placed planting material, including plant characteristics of the planting material, attributed to the field management unit, in particular to the field management sub-units.

Further preferably, effected planting information comprise the recorded plant characteristics attributed to the planting material contained in the container. Further examples of effected planting information are also described further below.

According to a further preferred embodiment, the method for managing agricultural processes comprises attributing harvest information to the field management unit, in particular to the field management sub-units. According to a further preferred embodiment, the method for managing agricultural processes comprises attributing post-harvest information to the field management unit, in particular to the field management sub-units.

Harvest and/ post-harvest information preferably is managed within a harvest module. Preferably, this harvest module includes an export function, which provides for different harvest machine software data import formats with the field management unit information and sequential order of field management sub-units to be harvested. Preferably, during harvest in some embodiments a GNSS device, in particular a rover unit as described herein, can be utilized to assign the coordinates to a set of harvest results for each field management sub-unit. This allows the position during harvest to mapped and checked against the plan. Preferably post-harvest information, such as details about cleaning the machine after the harvest, can also be captured.

Harvest information can include, but is not limited to one or several of the following group: yield, quality, purity, sugar content, dry matter content, moisture, weight, size, shape, color, soil adherence, chlorophyll beet portion, number of ears, ear height, protein content, starch content, chemical compounds (such as elements and molecules, e.g. sodium, alpha amino nitrogen).

According to a further preferred embodiment, the method for managing agricultural processes comprises attributing administrative information to the field management unit, in particular to the field management sub-units.

For example, administrative information can be used for a range of quality compliance checks and documentation, such as tools and methods to comply with quality management systems, e.g. the Excellence Through Stewardship (ETS) organization mentioned above.

For example, in the case of genetically modified organisms (GMOs), regulatory information can be specified, such as but not limited to regulatory trial IDs, permission numbers, and/or movement and/or release IDs and/or dates.

Further for example, administrative information can include a cost center per field management, which allows for a workforce cost allocation and costs per field management unit, in particular per field management sub-unit can be calculated, preferably during the season with the advantage that the cost information is available during the season, and not just calculated at the end, and preferably directly fed into accounting systems.

For example, administrative information may be provided via a connection to one or more administrative databases, such as but not limited to quality management databases and/or regulations databases.

Preferably, plant characteristics and/or site characteristics and/or treatment information and/or observation information and/or effected planting information and/or harvest information and/or post-harvest information and/or administrative information and/or time information are collected by one or several of the following group: sensor platform, database connection, data upload and/or download, synchronizing.

According to a further preferred embodiment, the method for managing agricultural processes comprises attributing time information to the field management unit, in particular to the field management sub-units, and/or to the site characteristics and/or to the plant characteristics and/or to the treatment information and/or to the observation information and/or to the effected planting information and/or to the harvest information and/or to the post-harvest information and/or to the administrative information.

In this way, spatio-temporal information can be created. Spatial refers to space. Temporal refers to time. Spatio-temporal, or spatial temporal, preferably is used in data analysis when data is collected across both space and time and describes a phenomenon in a certain location and time. In general, a spatial database stores and allows queries of data defined by geometric space. Many spatial databases can represent simple coordinates, points, lines and polygons. In general, a temporal database stores data relating to time whether past, present or future. A spatio-temporal database hosts data collected across both space and time that describe a phenomenon in a particular location and period of time.

Preferably, when steps are (repeatedly) carried out at different times and the stored information includes a time information about the time when the step was carried out and/or a time information about the time the stored information was accurate.

According to a further preferred embodiment, the method for managing agricultural processes comprises creating a georeferenced isolation area of the field management unit and storing the isolation area of the field management unit in the geospatial database.

According to a further preferred embodiment, the isolation area is created by calculation of an outer boundary of the isolation area by adding at least one buffer distance to the boundaries of the field management unit in a direction pointing away from the field management unit, in particular away from a center of the field management unit, and/or by calculation of a distance between the field management unit and another field management unit or another isolation area, and/or by calculation of an inner boundary of the isolation area by adding at least one buffer distance from the boundaries of the field management unit in a direction pointing towards the field management unit, in particular towards a center of the field management unit. For example, the boundaries of the isolation area can be substantially parallel to the boundaries of the field management unit. Further preferably, multiple isolation areas can be created.

The isolation area can for example serve to ensure a minimal distance between the field management unit and restricted areas, such as but not limited to rivers, trees, native plants, infrastructure, etc, and/or or to fulfil legal specifications with regard to minimal distances.

For example, a range of isolation distance tools can be provided using geospatial buffer operations to check that field management units are adequately spaced relative to other field management units.

As a first example, an isolation distance operation may be applied to outside of the field boundaries (external buffer). In this case, preferably up to two buffer distances may be entered, and a buffer algorithm preferably calculates an external buffer surrounding the boundary of the field management unit, which is drawn on the map to check the isolation distance from the current field in relation to other seed/plant production fields.

In a second example an internal isolation distance is entered, an internal buffer/isolation is created inside the field management unit boundary. This may be useful for creating an internal headland on the inside of the field management unit boundary.

As a third example, buffer pins are an option to check isolation distances. By defining an isolation distance and placing a pin in the map using the pin of a specific location tool, an isolation radius can created and displayed on the map and/or used for checking buffer distances.

The advantages of isolation areas allow for compliance with a number of requirements, including but not limited to one or several of the following group: GMO restrictions (avoid GMO enters natural environment, e.g. wind pollination, seeds/plant washed off field); preventing contaminations (cross pollination), to ensure genetic purity/exact crossing; distance from other fields; legal restriction of technical equipment; distance from natural features and areas, such as rivers, forests or environmentally protected areas; marking spray/treatment zones and applying a buffer to create restricted areas to be avoided by equipment or personnel (re-entering interval);

For example isolation areas can also be used for navigation of mobile (sensor) platforms and/or agricultural machines. For example, when an isolation area is used to geofence and close an area (temporarily or even long term), it can be preferred that a warning is given and/or the mobile (sensor) platform and/or agricultural machine is stopped from entering. Preferably, different levels of warning can be foreseen: 1. Warning when a navigation line leads through an isolation area; 2. Warning when entering an isolation area; 3. Virtual wall in the sense that it is not possible to enter the isolation area with the mobile (sensor) platform and/or agricultural machine, which preferably is realized by respective influence on the steering of the mobile (sensor) platform and/or agricultural machine.

Further, isolation area boundaries and/or field management unit boundaries and/or field management sub-unit boundaries may be utilized to trigger the mobile (sensor) platform and/or agricultural machine to start and/or stop perform a task when entering the isolation area and/or the field management unit and/or the field management sub-unit, e.g. for seeding and/or sensor measurement and/or spray actions.

According to a further preferred embodiment, the field management unit comprises a polygon and/or at least one of the field management sub-units, several of the field management sub-units or all of the field management sub-units comprise polygons, and/or at least one of the field management sub-units, several of the field management sub-units or all of the field management sub-units comprise point coordinates.

Preferably, the field management unit and/or at least one, several or all of the field management sub-units comprise a polygon. This can be understood, for example, in that the field management unit and/or the field management sub-units have the form of a polygon. In particular, the boundaries of the field management unit and/or the boundaries of the field management sub-units, can have the form of a polygon, preferably in the form of a circumferentially closed borderline enclosing the field management unit and/or the respective field management sub-unit, therein.

Further, at least one, several or all of the field management sub-units can comprise point coordinates. A field management sub-unit preferably can have the form of a polygon, as described above, or the form of a point coordinate. When the field management sub-unit is in the form of a point coordinate, it may also be referred to as point location.

When a field management sub-unit is in the form of a very small polygon and/or in the form a point coordinate, a very exact position of plant material can be defined. For example, it can be preferred that a single point coordinate is attributed to a single plant material, such as a single seed and/or a single young plant and/or a single cutting and/or a single bulb and/or a single tuber and/or a single leaf. When the field management sub-unit is in the form of a polygon, it depends on the size of the polygon, whether a single plant material is attributed to the field management sub-unit or whether two, three or more plant materials are attributed to the field management sub-unit.

Further it is preferred that any data attributed to the field management unit, in particular the field management sub-units, is attributed on a polygon or point coordinate level. For example, a picture taken by a camera may have pixels as physical points in a raster image as the smallest addressable elements and preferably the picture is attributed to the field management unit, in particular the field management sub-units, via attributing individual or grouped pixels to point coordinates and/or polygons.

According to a further preferred embodiment, the at least one sensor platform comprises a mobile sensor platform, and preferably comprises one or several of the following group: a (smart) phone, a tablet, a mobile computer, a wearable computer, in particular a smartwatch and/or hands free device, such as smart glasses, manned vehicle (e.g. quad bike or other), unmanned autonomous vehicle, in particular ground-borne and/or air-borne, for example a field robot and/or a drone, an agricultural machine, such as a tractor and/or a planter and/or a harvester and/or a sprayer, a helicopter, an airplane, a non-geostationary satellite. Herein, a mobile computer can also be referred to as a portable computer.

According to a further preferred embodiment, the at least one sensor platform comprises a stationary sensor platform, and preferably comprises one or several of the following group: a weather station, a stationary sensor, a stationary measuring device, a geostationary satellite, a mast.

According to a further preferred embodiment, the at least one sensor platform comprises a first sensor platform and a second sensor platform, wherein the first sensor platform is configured to send data relating to the field management unit directly to the second sensor platform, and/or receive data relating to the field management unit directly from the second sensor platform.

Preferably, when more than one sensor platform is provided, such at least first and second sensor platforms are adapted to exchange information and/or energy. For example, a first sensor platform may be adapted to charge a second sensor platform.

Further for example, a first sensor platform may be a sowing machine and a second sensor platform may be a mobile computer and the two exchange data, e.g. the mobile computer may provide information to the sowing machine with respect to the control of the tripping of the sowing machine and/or control of the speed and/or control when to stop.

Further for example, a first sensor platform may be a field robot and it could be controlled by a data exchanged with a second sensor platform based on the readings on the field management unit.

Further preferably, a first sensor platform may be acquiring data which is evaluated and communicated to a second sensor platform that will adapt its tasks based on the data received from the first sensor platform.

According to a further preferred embodiment, managing can comprise one or several of the following group: planning, administrating, performing maintenance work, inspecting, monitoring, documenting, analyzing, evaluating, visualizing.

As already described above, for example the creation of documentation reports can be useful for compliance and quality management. Further, data may be transferred to other systems, e.g. before and/or after analysis and/or for further analysis.

In particular, as also further described herein, a visualization module is provided, which allows for graphical and/or visual display of data and/or selected sub-sets of data. For example, the visualization may be in the form of a dashboard and/or in the form of virtual reality and/or animation and/or simulation.

Further for example, visualization may include display of relevant and/or selected information related to the current position of a user and/or (mobile) sensor platform. For example, a user may be provided with a graphical indication of restricted areas (e.g. due to spraying) within a certain distance of the current position of the user.

According to a further preferred embodiment, agricultural processes and/or tasks performed by a sensor platform and/or an agricultural machine can comprise one or several of the following group: placing planting material, such as, but not limited to sowing seeds and/or placing of young plants and/or cuttings and/or bulbs and/or tubers and/or grafts, transplanting planting material, such as, but not limited to young plants and/or cuttings and/or bulbs and/or tubers and/or grafts, singling planting material, such as, but not limited to young plants and/or cuttings and/or bulbs and/or tubers and/or grafts, topping planting material, such as, but not limited to young plants and/or cuttings and/or bulbs and/or tubers and/or grafts, collecting plant samples, harvesting, inspecting, pollination, treatment with chemicals and/or fertilizer and/or irrigation, weeding, in particular mechanical weeding, (re)seeding, (resowing), phenotyping.

Further, agricultural processes and/or tasks performed by a sensor platform and/or an agricultural machine can comprise further activities, such as, but not limited to, testing for plant cultivation and/or line or variety development and/or plant breeding and/or seed/plant production and/or data collection.

According to a further preferred embodiment, the field management sub-units can comprise one or several of the following group: blocks, plots, stripes, rows, sowing lines, point locations, in particular of individual plant material, such as, but not limited to individual seeds and/or individual plants.

Preferably, the creation of a layout of the field management unit may be performed by using a plotter module, preferably including a plotter algorithm. The creation of a layout of the field management unit preferably includes the creation of detailed geospatial layout plans.

For example, in seed/plant production, a seed/plant production plot may comprise blocks and plots. For example, a plot can be an aggregation of planting material from one genotype. Further for example, a block can be an aggregation of plots with planting material from different genotypes. Further for example, a block can be an aggregation of plots with planting material from a plant population. Further for example, a block may represent an inner boundary of seed/plant production activities with a more specific location of the production within a field management unit.

For example, seed/plant production layout in a field management unit may be defined by blocks and depending on the seed/plant production crop and activity, the layout may be defined at a more detailed level of plots. Preferably, the planning of the position of individual plants is also possible, wherein preferably, plants are marked with a point in the map and attributed a point coordinate. Seed production activities preferably include, but may not be limited to, basic seed production, isolation plots, DH (Double Haploid) production, cuttings (e.g., stecklings), selfing blocks, cages, green houses, open blocks, and partitions.

Information relating to field management sub-units, e.g. blocks, may include the name, type (such as pre-commercial seed production and/or commercial seed production), the seed/plant production activity, crop type, and other attributes.

The field management sub-unit may be spatially positioned in the field by manually drawing in the map and/or by automated placement by the plotter module, in particular based on the field management unit boundary, field management sub-units and/or uploaded boundary captured with a GNSS device, e.g. from a rover unit. For more detailed designs geospatial layouts may be generated for some of the seed/plant production activities such as partitions or open blocks. Preferably the plotter algorithm is adapted to use a combination of user defined inputs, such as and not limited to plot length/width, number of rows, number of seeds/plants, number of plots and the selected layout templates, automatically generates plot layouts.

As a further example, in the case of bi-annual crops, such as but not limited to Beta vulgaris, , the plotter module may provide for a striping tool to geospatially plan a layout specifically for cuttings, such as but not limited to stecklings. Stecklings preferably are small Beta vulgaris produced in the first year, that are after a process of vernalization, transplanted in the second year in a seed production field management unit to produce Beta vulgaris seeds. A layout specifically for cuttings, such as but not limited to stecklings may be created by specifying striping parameters, such as but not limited to a planting machine (which defines the working width and number of plots or stripes per working width) and rows per stripe. The user then selects an area of the field management unit for the layout plan and defines a starting point and direction of striping. Preferably, a layout plan of stripes is then automatically generated and mapped, with the total available length (also referred to as distance) of the stripes calculated.

Further preferably, the plotter module contains a process for assigning plant characteristics, such as, but not limited to genotype information and/or phenotype information, e.g. plot numbers, Ident or Veg Kenn attributes, which may be provided via a connection to a seed production database and/or breeding database, to the field management sub-units. In this way, for example genetic information from the seed production database and/or breeding database can be attributed to the field management sub-units, with the field management sub-units stored in the geospatial database.

Further preferably, the layout of a field management unit can be converted into other formats, such as a method for creating Excel exports with accompanying attributed data. The solution and its preferred embodiments described herein preferably offers the option to search for specific genetic components and further preferably also to visualize the aggregated data, e.g. components on a map, for example to view all field management units with other Beta vulgaris plants bearing seeds.

In addition to the field management sub-units, the plotter modul preferably is adapted to create navigation information, which may include but is not limited to navigation lines, which may be in the form of sowing guidance lines and/or alley guidance lines, for example. Navigation information may be used, for example, to define the exact paths for sowing or other tasks such as soil preparation for use in navigation on commercial steering systems. For the realization of layouts in the field management unit, in some cases it may be preferred to transfer the planned layouts and navigation information to a (mobile) sensor platform and/or agricultural machine, in particular a navigation application and/or commercial autopilot steering system thereof, preferably with RTK-typical precision, and preferably to control tasks based thereon, such as triggering the planting. The transfer may be, for example, manually via memory sticks or through an Internet connection via a cloud data transfer service.

According to a further preferred embodiment, wherein the site characteristics can comprise one or several of the following group: crop sequence, field crop history, slope, surface conditions, soil information, breeder, treatment, harvest type, harvest priority, harvest results, harvest observation data, field name, farmer, trial number, trial class.

Site characteristics can comprise one or several further information, such as but not limited to ownership boundaries, soil types, drainage areas, obstacles, waterways, field topography, previous yield data, previous field treatments, tramlines and/or controlled traffic areas, irrigation.

The solution and its preferred embodiments described herein preferably provides for the capture of supplementary information for each field management unit, such as but not limited to field crop history and/or documents. Field crop history may be created for each field management unit in different ways: i) manual input of previous years' crops and/or intercrops for the field; ii) by copying a field from a previous year, the previous history from manual input or the crops planned on the field from a previous year are automatically copied to the new field management unit. For example, a field management unit may be used for Beta vulgaris seed production in year one, maize, rye or wheat in year two, three and four, and again for Beta vulgaris production in year five. This documentation preferably provides a record of field crop history for breeding and/or seed production and other intercrops.

According to a further preferred embodiment, the plant characteristics can comprise one or several of the following group: year, crop, material group, variety name, variety type, variety traits, flowering categories, resistance, general vigor, pedigree, plant component information, crossing history, crossing locational history, in particular comprising place and/or time of crossing, male/female lines, regulatory restrictions, component information, disease management information, risk management factors, genetic identification, randomization type, number of replications, number of entries, number of plants.

Plant characteristics can comprise one or several further information, such as but not limited to experiment boundaries, plot boundaries, desired seed population within a plot, desired seed genetic identity within a plot, held treatments, seed treatments, plant growth data (e.g. plant emergence rate, plant germination rate, number of leaves as a function of time, plant height data, ear height data, etc.), harvest data, wind resistance data, crop, breeder, genetic information, genetic pedigree, plant traits and parameters, component information, breeder and/or management demands, organizational information, field information, trial number, trial class, total plots, plot numbers, genetic identification, randomization type, number of replications, number of entries, location, number of plants, total kernels per plot, rows per plot, breeder, treatment, harvest type, harvest priority, field name, farmer.

For example, a user will select the required plant characteristics and assign it to a field management unit and/or to a field management sub-unit. This allows, as an example, for a specific genotype to be linked spatially to a field management unit and/or to a field management sub-unit and therefore enables full spatial temporal track and traceability. It is therefore possible to find, as an example, a previous seed production in a field returned to the farmer in the next crop cycle or following years by navigating with a GNSS device, such as but not limited to a rover unit, to the previous seed location plan and coordinates.

According to a further preferred embodiment, the at least one sensor platform comprises at least one sensor, wherein preferably the at least one sensor comprises one or several of the following group: environmental sensor, for example soil sensor and/or soil water sensor, such as TDR and/or FDR and/or UMP, and/or GPR and/or EMI and/or ERT, preferably on-ground, weather sensor, for example weather station and/or sensor for weather data, phenotypical sensor, preferably on-ground and/or off-ground, for example RGB camera and/or thermal camera and/or hyperspectral camera and/or multispectral camera, position sensor: e.g. GNNS Gyroscope, EMU, potentiometers machine sensor, for example machine parameter information and/or machine readings, such as speed and/or heading, preferably on-ground, mechanical, for example scales and/or seed counters identification sensor, for example scanner and/or NFC sensor and/or RFID sensor, optical sensor, for example LIDAR and/or light curtain and/or NIRS, radar sensor, for example imaging radar sensor, such as synthetic aperture radar.

According to a further preferred embodiment, the geospatial database is part of a database system comprising one or more further databases, wherein preferably a data connection within the database system and/or between the geospatial database and one or more of the further databases of the database system and/or between the at least one sensor platform and the database system, in particular one or more of its databases, is a direct and/or indirect data connection.

For example, multiple databases and/or connected databases and/or at least one data warehouse may be provided.

For example, connection between databases and/or attributing information can comprise using and preferably storing unique identifiers.

Further preferably, any data mentioned herein may be provided via one or more of the following non-limiting examples: e.g. manual entry, automatic copying, constant database connection, direct and/or indirect database connection, database interface, manual and/or automatic synchronization.

Further non-limiting examples of data connection and/or attribution are: automatic assignment based on a field management unit identifier and information in a plant characteristics database via database interface; combination of datasets based on at least one identical attribute (in particular with no direct connection between databases and layout of field management unit); manual assignment by the user to information in a plant characteristics database via database interface (in particular with no direct connection between databases and layout of field management unit); manual uploading a plant characteristics database and automatic linking or manual assignment (in particular with no direct connection between databases and layout of field management unit); spatial linking of data, e.g. assigning soil sensor values to a field management sub-unit; directly linking obtained (e.g. sensor) data to a field management sub-unit and saving in the database (in particular with direct connection between databases and layout of field management unit); in-field, based on coordinate, linking field management unit to information from plant characteristics database; virtual polygon field management sub-unit /partition extending past a field management sub-unit boundary and information linked (in particular with direct connection between databases and layout of field management unit).

According to a further aspect, it is provided a system for managing agricultural processes, comprising a database system containing data relating to a field management unit, the data including georeferenced boundaries of the field management unit, a layout of the field management unit defining georeferenced field management sub-units within the field management unit, site characteristics attributed to the field management unit, in particular to the field management sub-units, plant characteristics to the field management unit, in particular to the field management sub-units, at least one sensor platform with a control unit, wherein the control unit is adapted to receive data relating to the field management unit from the database system, and wherein the control unit is adapted to initiate the performing of a task by the at least one sensor platform depending on the data relating to the field management unit.

The system preferably comprises at least one graphical user interface for exchanging information with a user, preferably receiving input from a user and/or transmitting information to a user.

According to a further aspect, it is provided a computer program comprising program commands for performing a method for managing agricultural processes described herein.

According to a further aspect, it is provided a computer program product comprising computer-readable instructions that, when loaded and run on a computer, cause the computer to perform a method for managing agricultural processes described herein.

Preferably, a computer program product is a physical, saleable software product comprising the program, such as, but not limited to a computer program stored on a computer readably medium (e.g. RAM, ROM, CD, memory device, etc), embedded system comprising a system and a computer program, network of computer implemented computer programs (e.g. client/server system, cloud computing system etc), computer with the computer program loaded thereon, running thereon, being stored thereon and/or being executed thereon.

As to the advantages, preferred embodiments and details of the individual different aspects and their preferred embodiments, reference is also made to the corresponding advantages, preferred embodiments and details described with reference to the respective other aspects.

Further advantageous embodiments result from the combination of individual, several or all of the preferred features described herein.

The method and/or system for managing agricultural processes are particularly suitable for being used in and/or with the method and/or the agricultural machine for placing planting material described below. Further, the method and/or system for managing agricultural processes are particularly suitable for being used in and/or with the base station for a real-time kinematic (RTK) positioning system and/or the real-time kinematic (RTK) positioning system and/or the method for calibrating a base station and/or the method for operating a real-time kinematic (RTK) positioning system described below.

In particular, individual and/or several of the features described with reference to the method and/or system for managing agricultural processes preferably can be combined with individual and/or several of the features described with reference to the method and/or the agricultural machine for placing planting material described below and/or to the base station for a real-time kinematic (RTK) positioning system and/or the real-time kinematic (RTK) positioning system and/or the method for calibrating a base station and/or the method for operating a real-time kinematic (RTK) positioning system described below to provide particularly preferred embodiments.

According to a further aspect, it is provided a method for placing planting material, in particular seeds and/or cuttings and/or young plants and/or tubers and/or bulbs and/or grafts, in a georeferenced field management unit, the method comprising providing an agricultural machine, in particular a planter, receiving, preferably from a database system, data relating to the field management unit, the data including georeferenced boundaries of the field management unit, a layout of the field management unit defining georeferenced field management sub-units within the field management unit, site characteristics attributed to the field management unit, in particular to the field management sub-units, providing planting material, including plant characteristics attributed to the planting material, placing the planting material in the field management unit, in particular in the field management sub-units, with the agricultural machine, according to the data relating to the field management unit, georeferencing the position of the placed planting material, including plant characteristics attributed to the planting material, in the field management unit, in particular in the field management sub-units.

Herein, a field and/or a field management unit, preferably can be understood as any area of land, enclosed or otherwise, used and/or usable for agricultural processes, such as, but not limited to cultivating crops, and can also be in the form of an area in a greenhouse, for example.

Herein, planting material is preferably understood as plant matter still to be planted. Planting material can be provided in different forms, such as, but not limited to seeds and/or cuttings and/or young plants and/or tubers and/or bulbs and/or seedlings and/or plantlets and/or saplings and/or grafts. For example, cuttings can be provided in form of stecklings and/or in form of cut pieces of plants. Preferably, stecklings are understood to be small roots and/or small plants that have grown from seeds for a certain period of time, preferably a few months. Stecklings can be, for example, but not limited to Beta vulgaris stecklings. Preferably, the stecklings, in particular Beta vulgaris stecklings, are grown from seeds on a field, subsequently they are removed from the field, and then they are transplanted by placing the stecklings according to the solution described herein. This process of transplanting the stecklings can also be referred to as transplanting process.

The provided agricultural machine is adapted to transport and/or place the planting material. Examples of an agricultural machine are, but are not limited to, a tractor and/or a field robot and/or a planter. Preferably, the agricultural machine is a planter that is adapted to plant the planting material, in particular to place the planting material on the field.

The agricultural machine can comprise and/or be connected to a trailer, in particular a trailer adapted to carry one or more persons and/or one or more planting devices. Preferably, the placing of the planting material can be carried out in a manual process, in a semi-automated process, and/or in an automated process. For example, in a manual process the placing of the planting material can be carried out in a way that during the placing of the planting material at least one person on the trailer performs the placing of the planting material by hand. Further for example, the placing of the planting material can be carried out within a semi-automated process, wherein at least one person on the trailer controls the placing of the planting material by using a planting device that is adapted to place the planting material. In a further alternative, the placing of the planting material can be carried out in an automated process, preferably using a planting automat. Preferably, a planting automat is adapted to place planting material without any person performing the actual placing of the planting material. An example of a planting automat is, but not limited thereto, a sowing machine.

Placing the planting material takes place in the georeferenced field management unit according to the data relating to the field management unit. The data relating to the field management unit is preferably received from a database system.

Herein, georeferencing, in particular georeferencing the position of the placed planting material, preferably means that the position of the placed planting material, in particular within the field management unit, is related to a ground system of geographic coordinates, preferably using a coordinate reference system, which in turn preferably can be related to a geodetic reference system. In particular, it is preferred that the position of individual planting material, such as, but not limited to, individual seeds and/or individual cuttings and/or individual young plants and/or individual tubers and/or individual bulbs and/or grafts, is related to a ground system of geographic coordinates.

Preferably, the position of the placed planting material is determined by using position data, in particular optimized position data, obtained with a real-time kinematic (RTK) positioning system, in particular with a real-time kinematic (RTK) positioning system as described herein further below.

Preferably, the layout of the field management unit comprises field management sub-units as described herein further below. For example, a plot can be an aggregation of planting material from one genotype. Further for example, a block can be an aggregation of plots with planting material from different genotypes.

Preferably, the data relating to the field management unit comprises navigation information, for example in the form of one or more navigation lines, wherein the navigation lines preferably comprise information for the movement of the agricultural machine in the field management unit, in particular in the field management sub-unit. Preferably the agricultural machine can be guided along the navigation lines.

As an example, the navigation lines can be arranged as stripes and/or parallel to each other. Preferably, the navigation lines are spaced to each other dependent on a working width, wherein the working width depends on a machine width and/or on the width of the agricultural machine and/or the width of the trailer being connected thereto and/or the width of a part of the agricultural machine. For example, the navigation lines can be spaced with a spacing that corresponds to the working width. The total distance of the navigation lines and/orthe distance of a single navigation line within the field management unit, in particular within the field management sub-unit, can be calculated. Thus, the distance along which the planting material is to be placed is known and the amount of planting material can be provided accordingly.

The method described herein has several advantages. For example, the process of placing planting material can be executed exactly as digitally planned in detail, in particular without or with only small deviations from the planned positioning when compared with the placed planting material, as the data needed for placing the planting material with exact positioning information can be received on the field and/or is available during placing the planting material. Thus, the planting material can be placed according to the data relating to the field management unit and placed at the positions as planned.

A further advantage of the method described herein is that the placing of the planting material can be achieved more time efficient when compared to established methods. The improved time efficiency is achieved because no further planning is necessary while the planting material is placed.

Further, by receiving exact positioning data, in particular navigation information, such as but not limited to navigation lines, with the solution described herein it is possible to execute several operations automatically. For example, steering of the agricultural machine and/or driving along the navigation lines can be done automatically and/or autonomously. Furthermore, placing the planting material according to the data relating to the field management unit can be done semi- automatically and/or automatically and/or autonomously.

Further, the solution described herein allows for an improved evaluation, analysis and reporting of the planting material placed in the field management unit, in particular in the field management sub-units, as the georeferenced position of the placed planting material is digitally available and precisely documented.

According to a preferred embodiment, the field management units, in particular the field management sub-units, have plant characteristics attributed thereto, in particular plant characteristics as described further below.

By attributing the plant characteristics to the field management units, in particular to the field management sub-units, the information about where, in particular at which exact position, which planting material with plant characteristics is to be placed is available. Preferably, the method comprises generating navigation information with a plotter module, preferably including a plotter algorithm, wherein the navigation information is attributed to the field management units, in particular to the field management sub-units.

Preferably, the field management units, in particular the field management sub-units, comprise predetermined positions of predetermined planting material including plant characteristics. The planting material can be placed according to the predetermined positions of the predetermined planting material in the field.

According to a further preferred embodiment, the method comprises attributing the position of the placed planting material, including plant characteristics of the planting material, to the field management unit, in particular to the field management sub-units. This information is also referred to as effected planting information herein.

Preferably, the position of the placed planting material, including plant characteristics, can be stored, preferably offline, for a certain period of time and/or for a certain number of field management units, in particular for a certain number of field management sub-units. Preferably the stored information can be transmitted later, preferably to the database system, in particular when a data connection to the database system is available. The possibility to store information, preferably offline, is advantageous, because the information of the position of the placed planting material cannot be lost in case there is (temporarily) no connection, in particular no connection to the database system. Thus, the method described herein can be used in areas with poor network coverage.

Preferably, the method comprises attributing the position of placed individual planting material, including plant characteristics of the individual planting material, to the field management unit, in particular to the field management sub-units.

According to a further preferred embodiment, the planting material is provided in at least one container, and/or the at least one container carries information about plant characteristics attributed to the planting material contained therein.

Preferably, the at least one container comprises the planting material that is to be placed in the field management unit, in particular in the field management sub-unit. The at least one container can be a box and/or a magazine and/or a bag and/or any other device that is adapted for storing and/or holding the planting material. As an example, information about the plant characteristics is printed onto the at least one container.

According to a further preferred embodiment, the plant characteristics are provided in the form of a machine-readable code, preferably an RFID tag or a bar code or a QR code.

Preferably, the plant characteristics can be read out by scanning the machine-readable code. Scanning the machine-readable code can be carried out using a mobile platform, for example, but not limited to, a mobile computer and/or a mobile (smart)phone and/or a tablet computer and/or a scanner. Preferably, reading the machine-readable code can be conducted using an NFC device and/or a device with an NFC chip, in particular a smartphone.

Using a machine-readable code is particularly advantageous, as it prevents errors when reading out the plant characteristics.

According to a further preferred embodiment, the method comprises providing a container with planting material, recording the plant characteristics attributed to the planting material contained in the container.

As described above, the container can be a box and/or a magazine and/or a bag and/or any other device that is adapted for storing and/or holding the planting material. Preferably, the container is filled with the planting material. Recording the plant characteristics attributed to the planting material contained in the container can be started by issuing a start signal, for example by pushing a button. Recording the plant characteristics attributed to the planting material contained in the container can be stopped by issuing a stop signal, for example by pushing a button. The information from the recorded plant characteristics can be combined with the information obtained from georeferencing the position of the placed planting material.

Preferably, effected planting information comprise the recorded plant characteristics attributed to the planting material contained in the container. It is preferred if the recorded plant characteristics attributed to the planting material contained in the container are part of the effected planting information.

An advantage of recording the plant characteristics attributed to the planting material contained in the container as described is that it is possible to obtain data with information about both the plant characteristics of the planting material and the position where, in particular at which position within the field management unit, in particular within the field management sub-unit, the planting material with these plant characteristics has been placed. This allows for an exact traceability of which planting material with which plant characteristics has been placed in which position.

Preferably, a movement of the agricultural machine is recorded. In particular, the effected planting information can comprise the recorded movement of the agricultural machine and/or its deviation from navigation information provided as part of the layout.

According to a further preferred embodiment, the method comprises when all or a predetermined portion of the planting material contained in the container has been placed, providing a new container with planting material, recording the plant characteristics attributed to the planting material contained in the new container.

Preferably, when the predetermined portion of the planting material contained in the container has been placed, recording the plant characteristics attributed to the planting material contained in the container is stopped, preferably automatically. The new container with planting material can comprise the planting material with the same or different plant characteristics compared to the plant characteristics attributed to the planting material contained in the container.

When all of the planting material contained in the container has been placed, no planting material is left in the container. Preferably, recording the plant characteristics attributed to the planting material contained in the container is stopped, preferably automatically, when all of the planting material contained in the container has been placed. The new container with planting material can comprise the planting material with the same or different plant characteristics compared to the plant characteristics attributed to the planting material contained in the container.

Preferably, the method comprises providing several further containers with planting material, recording the plant characteristics attributed to the planting material contained in the several further containers. The several further containers with planting material can comprise planting material with the same of different plant characteristics. The several further containers can be used one after another to place the planting material contained in the further containers.

According to a further preferred embodiment, the method comprises comparing the recorded plant characteristics attributed to the planting material contained in the container with the plant characteristics attributed to the field management unit, in particular the field management sub-units.

The comparing can comprise comparing if the recorded plant characteristics attributed to the planting material contained in the container and the plant characteristics attributed to the field management unit, in particular the field management sub-units, are the same and/or match and/or are different. Dependent on the result of the comparison it can be issued a notification showing information about the result of the comparison.

An advantage of the comparing the recorded plant characteristics attributed to the planting material contained in the container with the plant characteristics attributed to the field management unit, in particular the field management sub-units, is that the deviations and/or differences between the recorded plant characteristics and the plant characteristics attributed to the field management unit, in particular the field management sub-unit, can, preferably automatically, be displayed and/or analyzed. Furthermore, it can easily be verified, if the recorded plant characteristics attributed to the planting material contained in the container match the plant characteristics that the planting material to be placed in the field management unit, in particular in the field management sub-units, should have according to the plant characteristics attributed to the field management unit, in particular the field management sub-units.

According to a further preferred embodiment, the method comprises when the recorded plant characteristics attributed to the planting material contained in the container and the plant characteristics attributed to the field management unit, in particular the field management sub-units, do not match, issuing a warning notification.

By issuing a warning notification in the case that the recorded plant characteristics attributed to the planting material contained in the container and the plant characteristics attributed to the field management unit, in particular the field management sub-units, do not match, it can be ensured, that a person operating and/or monitoring the planting process is informed about the mismatch before the planting material has been placed. In such a way, mistakes, for example choosing a wrong container and/or a wrong planting material with plant characteristics, can be avoided.

According to a further preferred embodiment, the method comprises generating recorded field management units, in particular field management sub-units, with the recorded plant characteristics attributed thereto, and/or attributing the recorded plant characteristics to the field management units, in particular field management sub-units.

Further preferably, the method comprises generating a recorded field management unit, in particular field management sub-units, with the recorded plant characteristics attributed thereto.

Herein, recorded field management units preferably are understood as field management units that are generated by recording effected planting information, in particular information about the position of the placed planting material that has been placed with the agricultural machine, in particular during movement of the agricultural machine in a field management unit, in particular a field management sub-unit.

Preferably, with the effected planting information, in particular information about the position of the placed planting material, recorded field management units, in particular field management sub-units, can be generated. Preferably, recorded field management units comprise a layout and/or layouts comprising the effected planting information, in particular information about the position of the placed planting material.

By generating recorded field management units, in particular field management sub-units, with recorded plant characteristics attributed thereto, detailed information about the effected planting information are available and/or can be visualized. As the effected planting information comprise generated recorded field management units, visualized effected planting information can be compared with the data relating to the field management unit, in particular the field management sub-units.

Preferably, the effected planting information comprise the generated recorded field management units, in particular field management sub-units. It is preferred if the generated recorded field management unit, in particular field management sub-units, are attributed to the effected planting information.

According to a further preferred embodiment, the method comprises recording sensor information, in particular weather information and/or environmental conditions information and/or field conditions information, preferably comprising information about temperature and/or humidity and/or soil moisture content, attributing the recorded sensor information to the field management units, in particular field management sub-units.

It is preferred to obtain data with information about weather conditions and/or environmental conditions and/or field conditions, in particular temperature conditions and/or humidity conditions, and/or soil moisture content.

In order to obtain data with such information the recorded sensor information can be provided by at least one sensor, preferably by several sensors. The at least one sensor can be adapted to obtain such sensor information. The at least one sensor can for example be an environmental sensor and/or a weather sensor and/or a phenotypical sensor and/or an optical sensor.

According to a further preferred embodiment, the method comprises recording a position of a single planting material, in particular a single seed and/or cutting and/ or young plant and/or tuber and/or bulb and/or grafts, preferably by using information from a locating sensor, wherein the locating sensor is arranged on the agricultural machine.

Recording a position of a single planting material can be achieved by using a locating sensor. The locating sensor can be arranged on the agricultural machine, in particular on the planter and/or the trailer that is connected to and/or part of the agricultural machine. Preferably, the locating sensor is arranged on a dispenser, which dispenses the single planting material. The locating sensor can for example comprise a light barrier.

An advantage of recording a position of a single planting material is that the exact position of the single planting material is known. Thus, after placing the single planting material it can be identified and observed at a later date and/or time. A single planting material can be also referred to as an individual planting material.

According to a further aspect, it is provided an agricultural machine, in particular a planter, for placing planting material, in particular seeds and/or cuttings and/or young plants and/or tubers and/or bulbs and/or grafts, in a georeferenced field management unit, the agricultural machine comprising a placing unit adapted for placing planting material, in particular seeds and/or cuttings and/or grafts, in a georeferenced field management unit, a control unit adapted for receiving, preferably from a database system, data relating to the field management unit, the data including georeferenced boundaries of the field management unit, a layout of the field management unit defining georeferenced field management sub-units within the field management unit, site characteristics attributed to the field management unit, in particular to the field management sub-units, a rover unit for use in a real-time kinematic (RTK) positioning system with a base station, wherein the control unit, using the rover unit, is adapted to georeference the position of the placed planting material, including plant characteristics attributed to the planting material, in the field management unit, in particular in the field management sub-units.

Components of the agricultural machine preferably are a placing unit, a control unit, and a rover unit. Preferably, the placing unit is adapted to place and/or plant the planting material. The placing unit can be operated automated and/or semi-automated and/or by hand. The placing unit can comprise a placing device and/or a planting automat.

According to a preferred embodiment, the agricultural machine comprises a locating sensor that is adapted to provide information about the position of a single planting material, in particular a single seed and/or cutting and/or young plant and/or tuber and/or bulb and/or grafts, and/or at least one sensor that is adapted to provide weather information and/or environmental conditions information and/or field conditions information, preferably comprising information about temperature and/or humidity and/or soil moisture content.

Recording a position of a single planting material can be achieved by using a locating sensor that is arranged on the agricultural machine, in particular on the planter and/or the trailer that is connected to and/or part of the agricultural machine. Preferably, the locating sensor is arranged on a dispenser, which dispenses the single planting material. The locating sensor can for example comprise a light barrier.

An advantage of recording a position of a single planting material is that the exact position of the single planting material is known. Thus, after placing the single planting material it can be identified and observed at a later date and/or time. As the locating sensor is arranged on the agricultural machine, no additional devices for holding and/or moving the location sensor is necessary.

Preferably, the at least one sensor is arranged on the agricultural machine, in particular on the planter and/or the trailer that is connected to and/or part of the agricultural machine.

An advantage of arranging the at least one sensor on the agricultural machine is that no additional devices for holding and/or moving the at least one sensor is necessary. Furthermore, the at least one sensor is always arranged close to the location where placing the planting material takes place. Thus, the data obtained from the at least one sensor comprises relatively precise information about the conditions that are given at the location where placing the planting material takes place.

According to a further aspect, it is provided a use of the agricultural machine as described herein in and/or with a method and/or system for managing agricultural processes.

The use of the agricultural machine in and/or with a method and/or system for managing agricultural process is particularly advantageous in that the planning of placing planting material can be done digitally and remotely. Placing planting material can then be conducted using the digitally created information that is necessary to conduct the placing.

According to a further aspect, it is provided a computer program comprising program commands for performing a method for placing planting material described herein.

According to a further aspect, it is provided a computer program product comprising computer-readable instructions that, when loaded and run on a computer, cause the computer to perform a method for placing planting material described herein.

According to a further aspect, it is provided a base station for a real-time kinematic (RTK) positioning system with one or more rover units, comprising a global navigation satellite system (GNSS) receiver, a transmission device for transmitting correction data to the one or more rover units, a wireless LAN (WLAN) module, and at least one control unit, wherein the at least one control unit is adapted to operate the base station in a rover mode comprising receiving correction data from a Networked Transport of RTCM via Internet Protocol (NTRIP) server and determining two or more rover mode positions of the base station based on the received NTRIP correction data, and wherein the at least one control unit is adapted to determine an optimized position of the base station by averaging the two or more rover mode positions.

Components of the base station are a global navigation satellite system (GNSS) receiver, a transmission device, a WLAN module and at least one control unit. The GNSS receiver preferably is adapted to connect to a global navigation satellite system and receive position data therefrom. Preferably, the GNSS receiver is adapted to connect to two or more different systems, preferably to systems such as GPS and/or GLONASS and/or Galileo and/or BeiDou and/or further global navigation satellite systems. This is a particular advantage over existing solutions, which are bound to a single GNSS system.

The transmission device is adapted to transmit correction data from the base station to the one or more rover units. As will be described in more detail further below, the transmission device may be adapted to transmit correction data from the base station to the one or more rover units in a wireless way, for example via a radio modem, and/or in a wired way, for example via a cable, such as a USB cable.

Herein, a rover unit preferably can be understood as any mobile and/or moveable device comprising a GNSS receiver. For example, a mobile sensor platform and/or an agricultural machine can be in the form a rover unit or and/or can comprise a rover unit and/or can function as a rover unit.

A further component of the base station is the wireless LAN (WLAN) module. As will be described in further detail below, the WLAN module comprises a WLAN client and/or a Wireless Access Point. In particular, the WLAN module preferably is adapted for connecting to and/or for providing a WLAN hotspot in order to provide internet connectivity to the base station.

Further, the base station comprises at least one control unit. For example, a minimal version of a control unit can be a, preferably minimal, central processing unit (CPU). Further, the control unit could be in the form of a single board computer, such as, but not limited to, a Raspberry Pi. Further, the at least one control unit as a component of the base station can be part of a larger, preferably distributed, control arrangement, which may comprise further components, which are not part of the base station, but may be part of a mobile platform, for example, but not limited to, a mobile computer and/or a mobile (smart)phone and/or a tablet computer. These further components of a control arrangement can be in the form of one or more further control units.

Further, the control unit of the base station may in a minimal form not comprise a graphical user interface, which may be provided rather by a further control unit and/or a component of a control arrangement, which is connected to the control unit of the base station, but which is not part of the base station itself. Preferably, the control unit of the base station can be connected to one or more further components of a larger control arrangement and/or to one or more further control units in a wired and/or wireless way.

For example, the at least one control unit of the base station may be adapted to determine two or more rover mode positions and to determine an optimized position of the base station by averaging the two or more rover mode positions. A further control unit and/or a component of a larger control arrangement may be provided and adapted to establish a connection between the base station, preferably as an NTRIP client, with an NTRIP server. Further for example, the at least one control unit of the base station may be adapted to determine two or more rover mode positions and to determine an optimized position of the base station by averaging the two or more rover mode positions and also be adapted to establish the connection between the base station, preferably as an NTRIP client, with an NTRIP server.

The base station preferably is used in an RTK system, which usually comprises at least two GNSS receivers with a data link between them. One GNSS receiver is a component of the base station, as described herein. The at least one further GNSS receiver preferably is on the one or more rover units. Usually, the base station remains stationary in an RTK system. A possible exception will be described below. The one or more rover units of an RTK system are usually adapted to move around. For example, base stations usually are placed at the edge of a field, in which one or more rover units shall perform tasks by moving around. In general, the purpose of the base station is to calculate position corrections and transmit them to the one or more rover units. In the present description, this mode of operation of the base station, where the base station transmits correction date to the one or more rover units, preferably is referred to as stationary mode of the base station.

Each of the rover units usually determines its position by receiving GNSS position data and then preferably each of the rover units uses the correction data received from the base station to correct the (usually less accurate) position data received from the GNSS. Preferably, with the correction data received from the base station, the one or more rover units are able to determine their positions and/or navigate and/or auto-steer within an accuracy of significantly less than +/- 10 cm, in particular less than +/- 5 cm, in particular less than +/- 3 cm, preferably in the range of +/- 2 to 3 cm.

The solution described herein is based, inter alia, on the finding that in existing RTK systems, in particular in environments without positionally known waypoints, the base station needs to be placed in a fixed position and the coordinates of the base station at this fixed position need to be known. A base station uses the fixed coordinates to calculate the errors in the transmit time and phase measurement caused by web errors, clock errors and ionospheric activity. The GNSS position data usually provides position data with an accuracy of about +/- 2 m, since no correction data is available for the base station. This error is systematically transferred to the rover units that use the correction data from the base station. Nevertheless, the relative accuracy of the position determination is still in the range of about 2.5 cm.

In particular, the solution as described herein may be adapted to use a fixed RTK approach and/or a float RTK approach. Preferably, the solution as described herein uses a fixed RTK approach, as opposed to a float RTK approach.

A fixed RTK approach uses a complicated mathematical formula or algorithm to calculate the exact number of radio wavelengths between the satellites and the base station antenna -- a process known as ambiguity resolution -- and yield either a fixed or float solution. In a fixed solution, the number of wavelengths is a whole number, or integer, and the algorithm is constrained to yield a whole number. A low number of visible satellites, poor satellite constellation geometry and a poor radio link between the base station and the rover may prevent a fixed solution.

In a float RTK approach, the algorithm does not yield an acceptable fixed solution, so the ambiguity is allowed to be a decimal or floating point number. According to Tripod Data Systems, a float solution typically generates precise coordinates to between 4 and 18 inches over a known distance between two points of just over half a mile. If a float solution is the only solution available, it may be possible to reinitialize an RTK system, or simply wait, for a more precise fixed solution. However, if poor satellite visibility is to blame, a fixed solution may be unavailable.

Further, as described also in more detail below, a particularly high accuracy of position data is necessary in particular for breeding and/or seed variety development and/or seed research applications, where field management units, in particular field management sub-units, with a relatively small size are used. For these smaller sized field management units, in particular field management sub-units, as described further below, specific requirements with respect to accuracy of position data apply. An accuracy +/- 2m of GNSS may be sufficient in general agricultural applications, such as but not limited to farming, even so-called precision farming, for general agricultural production, in particular for growing crops in large quantities. In areas of in application with special accuracy requirements, such as but not limited to breeding and/or seed variety development and/or seed research applications, an accuracy +/- 2m of GNSS is not sufficient, even if a relative accuracy of 2.5 cm could achieved. For applications with such high accuracy requirements, such as but not limited to breeding and/or seed variety development and/or seed research applications, very high absolute accuracies (as opposed to relative accuracies) are required. The reason is that in applications, such as but not limited to breeding and/or seed variety development and/or seed research applications, repeated and/or multiple tasks and/or agricultural processes are performed on field management units, in particular the field management sub-units, at different points in time, which all need to be performed with the same absolute accuracy.

A further disadvantage of existing systems is that if a previous job using the base station shall be continued and/or repeated, in particular after a break and/or disruption, the base station, in particular the GNSS receiver must be returned to the exact location as when the job was previously created and/or executed. For example, if a base station is to be used on different dates and/or moved between uses, it is essential that the exact same reference coordinates are used and that the base station is set up at the exact same location. In particular, accurate latitude and longitude positions for the base station must be known.

Therefore, in existing systems, it is required to set up a base station on positionally known waypoints, for example and officially measured benchmark and these known coordinates are then entered into the GNSS receiver of the base station. In this case, absolute accuracies of about 2.5 cm can be achieved by transmitting correction data to the one or more rover units.

However, positionally known waypoints, in particular officially measured benchmarks, may not be available in remote environments and/orthe process of entering the coordinates into the GNSS receiver of a base station, possibly repeatedly, and/or the process of placing the base station again in the exact same location as for a previous job is time-consuming and/or prone to errors.

Therefore, in the solution described herein, the at least one control unit of the base station is adapted to operate the base station in a rover mode, which comprises receiving correction data from a Networked Transport of RTCM via Internet Protocol (NTRIP) Server. NTRIP is a protocol for providing real-time correction services for GNSS, in particular GPS, positioning. NTRIP enables the streaming of RTK correction data via the Internet.

Operating the base station in a rover mode in particular means that - opposite to the stationary mode, in which the base station is transmitting correction data to the one or more rover units - in the rover mode the base station is receiving correction data. In this description, this mode of operation of the base station, where the base station receives correction data, is referred to as rover mode.

Thus, while the base station's primary function is to transmit correction data to one or more rover units, the solution described herein foresees to operate the base station, preferably for a predetermined and/or limited period of time, in a rover mode, where the base station receives correction data, namely from an NTRIP server. Thus, in the rover mode, the base station preferably acts as an NTRIP client.

While the base station is operated in the rover mode and preferably functions as an NTRIP client, two or more so-called rover mode positions of the base stations are determined based on the NTRIP correction data received from the NTRIP server. According to the solution described herein, the at least one control unit is adapted to determine an optimized position of the base station by averaging the two or more rover mode positions. Thus, during operation of the base station in the rover mode, at least two so-called rover mode positions (i.e. positions of the base station determined while the base station is operated in the rover mode) are determined based on the NTRIP correction data and then the average of the at least two rover mode positions is determined and referred to as the optimized position of the base station.

Preferably, once an optimized position of the base station has been determined, the operation of the base station is switched from the rover mode to the stationary mode, in which the base station transmits correction data to the rover units. Thus, preferably, in the stationary mode, the rover unit does not act as an NTRIP client anymore.

Preferably, during operation of the base station in the rover mode, the base station is kept stationary, i.e. is not moved, but rather kept at one single, fixed position. Preferably, the base station and/or the at least one control unit is and/or are adapted for operation of the base station in the rover mode with the base station being stationary during operation in the rover mode. In this way, it is known that the actual, real position of the base station remains the same while the base station is operated in the rover mode. Thus, in case the two or more rover mode positions determined by the base station based on the received NTRIP correction data differ from each other, while at the same time the base station has not moved, an optimized position can determined by averaging the two or more (different) rover mode positions.

In particular, as described with more detail below, when the base station is operated in the rover mode for example for about 5 to 10 minutes, and/or about preferably 500 to 1,000 rover mode positions of the base station are determined based on the received NTRIP correction data, and then these 500 to 1,000 rover mode positions are averaged, i.e. an average position is calculated from these 500 to 1,000 rover mode positions, this optimized position has a very high accuracy and closely matches to the real, actual position of the base station.

The solution described herein has the advantage that an optimized position of the base station with a very high level of accuracy can be determined basically anywhere, as long as the WLAN module of the base station can be connected to an NTRIP client. In this way, a base station can be used in different fields. Further, for example, after completion of one job in one field, the base station can be moved to another field for completion of a further job there.

A further advantage is that the base station can be deployed in a fast, easy and reliable way by operating the base station in the rover mode as described herein. When the optimized position of the base station has been determined as described herein, the correction data transmitted from the base station to the one or more rover units allows the rover units to determine their respective positions with an accuracy within the RTK-typical range, in particular of about +/- 2 to 3 cm. This is particularly advantageous in environments without positionally known waypoints, such as remote and/or very large agricultural environments. This is further particularly advantageous in application areas where high accuracy of position data is necessary, such as but not limited to breeding and/or seed variety development and/or seed research applications, where field management units, in particular field management sub-units, with a relatively small size are used, as also described further below.

Further, the solution described herein provides a very cost-effective way to determine an optimized position of the base station suitable for using the base station to transmit correction data to one or more rover units with an RTK-typical position accuracy, preferably of about +/- 2 to 3 cm.

The solution described herein overcomes the disadvantages of existing solutions, where the exact coordinate of a base station must be known and entered into the GNSS receiver prior to operating the base station in order to transmit correction data. In particular, the solution described herein is compatible to a variety of GNSS solutions, such as, but not limited to, GPS, GLONASS, Galileo, and/or BeiDou. In this way, the solution described herein is cost-effective, flexible with respect to areas of application, user-friendly and allows easy integration into existing and/or optimized workflows. In particular, it is advantageous that the solution described herein is associated with low costs, in particular compared to existing solutions. Further, the solution described herein has the advantage of a high flexibility, in particular with respect to the applicability of the base station as a stationary field reference station placed near a field management unit and/or of the base station as a mobile reference station which may be positioned on a rover unit, e.g. positioned as a cube reference station on a tractor and/or as a plug-in module for a smart phone, and move with the rover unit. Advantageously, the base station, in particular in the form of a mobile reference station, is light and/or practical and/or user friendly and/or easy to operate.

According to a preferred embodiment, the at least one control unit is adapted to be configured with regard to the length of a period for operation in the rover mode and/or with regard to a number of rover mode positions to be averaged.

Preferably, the length of the period for operation in the rover mode can be a predetermined period of time, which can be preferably determined and/or changed by a user. Further preferably, the number of rover mode positions to be determined while the base station is operated in the rover mode and which then are averaged to determine the optimized position of the base station is a predetermined number, which preferably can be determined and/or changed by a user.

For example, the at least one control unit as a component of the base station comprises an interface, preferably a wireless interface, to one or more components of a control arrangement, for example to a mobile platform, like a mobile computer and/or a mobile (smart)phone and/or a tablet computer. Preferably, the at least one control unit comprises an interface, preferably a wireless interface, to a Windows device. Preferably, the wireless interface is a WLAN interface. In this way, for example, the at least one control unit can be configured via a mobile platform by a user without the need for a wired access to the base station.

Further preferably, the GNSS receiver includes a multiband antenna.

According to a preferred embodiment, the transmission device is adapted to transmit correction data to the one or more rover units in a wireless and/or wired way.

There are several ways to transmit a correction signal from base station to one or more rover units.

In a preferred embodiment, the transmission device is adapted to transmit correction data to the one or more rover units in a wireless way. For example, as will be described further below, a wireless way to transmit correction data from the transmission device to the one or more rover units can be via a radio modem using data radio in a certain frequency range, typically in the UHF Band. This is a preferred way to achieve real-time, low-cost wireless signal transmission.

This embodiment is particularly preferred when the base station transmits correction data to one or more rover units, in particular to two or more rover units which move independently from each other. Further preferably, in this embodiment, the base station is kept stationary, for example at the edge of a field or between two fields, during operation in the stationary mode, i.e. during transmission of correction data from the base station to the rover units. Transmission of correction data to rover units in a wireless way is an easy and cost efficient way to provide correction data to two or more rover units from a single base station.

In a further preferred embodiment, the transmission device is adapted to transmit correction data to the one or more rover units in a wired way. For example, the correction data can be transmitted from the transmission device to the one or more rover units by a cable, for example via a USB cable. A wired connection for the transmission of correction data between the transmission device and the one or more rover units is particularly preferred in case only one rover unit is provided with correction data from the base station and/or when two or more rover units are provided with correction data from a single base station, wherein the two or more rover units do not move independently from each other, but rather wherein the two or more rover units move parallel and/or in a fixed relation to each other, as may be the case, for example, during harvesting when a harvester and a transporter move jointly across a field. In this embodiment, where the connection between the transmission device and the one or more rover units for the transmission of correction data is a wired connection, it can be preferred that the base station does not remain stationary, for example at the edge of the field, during operation of the base station in the stationary mode. Rather, in this embodiment, it can be preferred that the base station is positioned on the rover unit and moves with the rover unit when the base station is in the stationary mode, i.e. when the base station transmits correction data to the rover unit. It is noted, however, that even in this embodiment, when the base station is mounted on the rover unit, it is preferred that the base station remains stationary, i.e. is not moved, during operation of the base station in the rover mode, i.e. during the determination of the optimized position of the base station when the base station acts as the rover, i.e. as an NTRIP client. However, when the determination of the optimized position is finished and the base station is switched from the rover mode to the stationary mode, wherein the base station transmits correction data based on its optimized position to the rover unit, the base station can then be moved along with the rover unit. Preferably, in this case, a wireless connectivity of the base station, in particular a WLAN connectivity of the base station, in particular to the NTRIP server, is disabled during operation of the base station in the stationary mode. In this way, the base station can be used, for example, as a plug-in module, preferably for any kind of mobile platform serving as a rover unit, for example, but not limited to, a mobile (smart)phone, a mobile computer, a tablet computer, or a manned or unmanned field operation device, which may be ground-borne and/or air-borne, such as drones, tractors, or field robots.

According to a preferred embodiment, the base station comprises a, preferably weather-proof, casing.

A casing, in particular a weather-proof casing, has the advantage that the components of the base station contained within the casing are protected, in particular against debris and/or humidity and/or damage and/or unwanted manipulation. Preferably, the casing can be locked. Preferably, one or more component or subcomponent of the base station is or are located outside the casing.

For example, it can be preferred that the GNSS receiver, in particular the multiband antenna, is located outside the casing during operation of the base station. Further preferably, at least one, several or all of the components positioned inside the casing are connected to each other in a wireless and/or wired way. Further preferably, at least one, several or all of the components positioned outside of the casing can be connected to one, several or all of the components positioned inside the casing in a wireless and/or wired way.

According to a further preferred embodiment, the transmission device comprises a radio modem, wherein preferably the radio modem includes a radio antenna, and/or wherein preferably the radio modem includes a radio antenna telescope, and/or wherein preferably the radio modem is adapted for transmitting data in a frequency range of 403-473 MHz and/or 902-928 MHz, and/or wherein preferably the radio modem has a range of up to 3 km, preferably up to 5 km or up to 6 km or up to 25 km or up to 50 km .

As mentioned above, it can be preferred that the transmission device comprises a radio modem, in particular for a wireless transmission of correction data from the base station to the one or more rover units. In particular, the frequency ranges can be chosen in accordance with national and/or regional preferences. Further, the transmission power and/or the range of the radio modem, in particular the data transmission via the radio modem, can be chosen according to national and/or regional and/or environmental requirements, such as topography, and/or according to the radio antenna height.

For example, in Germany, preferably the data transmission between a base station and one or more rover units takes place as data radio in the frequency range of 403 to 473 MHz and the transmission power preferably is in the range of up to 3 km. However, in other countries with different regulation and/or larger fields, different frequency ranges and/or different transmission power for ranges of up to 25 or 50 km can be preferred. In particular, the range of the radio modem also depends on the topography of the field to be covered and/or the height of the radio antenna.

Preferably, the radio modem has a range which covers at least one field, or preferably two or more fields. In this way, one base station, preferably positioned between adjacent fields, can provide correction data to rover units moving in these two or more adjacent fields. Further preferably, the radio modem has a range that covers at least one cell in a cellular network.

According to a further preferred embodiment, the base station comprises at least one energy source, in particular at least one accumulator, and/or an interface to an energy source.

An accumulator as an energy source has the advantage of providing an independent base station. Preferably, an accumulator is provided with at least one interface to a, preferably external, energy source for (re)charging the accumulator.

According to a further preferred embodiment, the wireless LAN (WLAN) module comprises a wireless LAN client and/or a Wireless Access Point, wherein preferably the Wireless Access Point comprises a router and/or mobile device, e.g. a standard smartphone, preferably adapted to function as a hotspot.

The WLAN module can comprise a wireless LAN client and/or a wireless access point. Further, a wireless access point can also be provided as a separate unit, i.e. not as part of the base station. For example, a wireless access point can be, in particular temporarily, realized by a mobile platform, such as, but not limited to, a (smart)phone, a mobile computer or a tablet computer, which can function as an internet hotspot, while the base station only comprises a wireless LAN client for connection to such a, preferably temporary, hotspot. In particular, the internet connectivity of the base station is needed only temporarily, in particular while the base station is operated in the rover mode. Preferably, during operation in the rover mode of the base station, the internet connectivity is needed for creating a connection of the base station as an NTRIP client to an NTRIP server for receiving NTRIP correction data in order to determine the optimized position of the base station. Since preferably the operation of the base station in the rover mode is only for a limited period of time, it can be preferred to provide the wireless access point not as a part of the base station, but as a separate unit, in particular as part of a mobile platform, for providing temporary internet connection.

According to a further aspect, it is provided a real-time kinematic (RTK) positioning system with a base station as described herein and one or more rover units.

According to a further aspect, it is provided the use of a base station as described herein in a real-time kinematic (RTK) positioning system and/or use of a base station as described herein and/or of a real-time kinematic (RTK) positioning system as described herein in and/or with a method and/or system for managing agricultural processes as described herein and/or in a method for placing planting material, in particular seeds and/or cuttings and/or young plants and/or tubers and/or bulbs and/or grafts, in a georeferenced field management unit as described herein, and/or in and/or with an agricultural machine, in particular a planter, for placing planting material, in particular seeds and/or cuttings and/or young plants and/or tubers and/or bulbs and/or grafts, in a georeferenced field management unit as described herein, and/or in an environment without positionally known waypoints, in particular in an agricultural environment without positionally known waypoints and/or in application areas where high accuracy of position data is necessary, such as but not limited to breeding and/or seed variety development and/or seed research applications.

The use of a base station and/or of an RTK positioning system as described herein provides advantages in a number of application areas. In particular, the use of the base station and/or the RTK positioning system as described herein in and/or with a method and/or a system for managing agricultural processes as described herein has the advantage of providing highly accurate real-time position data to a number of rover units, which can be used as sensor platforms in the method and/or system for managing agricultural processes as described herein. The provision of highly accurate real-time position data is highly advantageous regarding the data quality and thus also enhances the quality and availability of possibilities for analyses and/or documentation and/or visualization in a method and/or a system for managing agricultural processes. These advantages are particularly appreciated in an environment without positionally known waypoints, where the provision of highly accurate real-time position data is of particular relevance. This is further particularly advantageous in application areas where high accuracy of position data is necessary, such as but not limited to breeding and/or seed variety development and/or seed research applications, where field management units, in particular field management sub-units, with a relatively small size are used, as also described further below.

According to a further aspect, it is provided a method for calibrating a base station for use in a real-time kinematic (RTK) positioning system with one or more rover units, the method comprising providing a base station with a global navigation satellite system (GNSS) receiver, a transmission device, a wireless LAN (WLAN) module, operating the base station in a rover mode comprising receiving correction data from a Networked Transport of RTCM via Internet Protocol (NTRIP) server and determining two or more rover mode positions of the base station based on the received NTRIP correction data, determining an optimized position of the base station by averaging the two or more rover mode positions.

According to a preferred embodiment of the method for calibrating a base station, the base station is stationary during operation in the rover mode.

According to a further preferred embodiment of the method for calibrating a base station, the base station receives the correction data from the NTRIP server via the wireless LAN (WLAN) module.

According to a further preferred embodiment of the method for calibrating a base station, the base station is operated in the rover mode for a period of time, in particular less than 15 minutes or less than 10 minutes, preferably between 5-10 minutes, and/or the base station determines at least 100 rover mode positions, or at least 250 rover mode positions, or at least 500 rover mode positions, or at least 1,000 rover mode positions, preferably between 500 and 1,000 rover mode positions.

According to a further preferred embodiment, the method for calibrating a base station comprises configuring the base station with regard to the length of a period for operation in the rover mode and/or with regard to a number of rover mode positions to be averaged.

According to a further aspect, it is provided a method for operating a real-time kinematic (RTK) positioning system with a base station, preferably a base station as described herein, and one or more rover units, the method for operating a real-time kinematic (RTK) positioning system comprising calibrating the base station as described herein, operating the base station in a stationary mode using the optimized position.

According to a preferred embodiment, the method for operating a real-time kinematic (RTK) positioning system comprises transmitting correction data to the one or more rover units, preferably via the transmission device and/or preferably in a standardized correction data format according to the Radio Technical Commission for Maritime Services (RTCM).

According to a further aspect, it is provided a computer program comprising program commands for performing a method for calibrating a base station described herein and/or a method for operating a real-time kinematic (RTK) positioning system described herein.

According to a further aspect, it is provided a computer program product comprising computer-readable instructions that, when loaded and run on a computer, cause the computer to perform a method for calibrating a base station described herein and/or a method for operating a real-time kinematic (RTK) positioning system described herein.

Preferred embodiments shall now be described with reference to the attached drawings, in which
- Fig. 1:: shows a schematic workflow of an example of a method for managing agricultural processes;
- Fig. 2:: shows a schematic overview of an example of a system for managing agricultural processes;
- Fig. 3:: shows an example of acquisition and organization of in-field data;
- Fig. 4:: shows a schematic representation of an example of a graphical user interface used for a method for managing agricultural processes;
- Fig. 5:: shows a schematic representation of an example of a graphical user interface used for a method for managing agricultural processes;
- Fig. 6:: shows a schematic representation of an example of a method for managing agricultural processes;
- Fig. 7:: shows a schematic representation of an example of a method for managing agricultural processes;
- Fig. 8:: shows a schematic representation of an example of a method for managing agricultural processes;
- Fig. 9:: shows an example of a field management unit with a field management sub-unit and an isolation area;
- Fig. 10:: shows an example of a layout of a field management unit with a field management sub-unit comprising several blocks and an isolation area;
- Fig. 11:: shows an example of a layout of a field management unit with a field management sub-unit comprising several stripes;
- Fig. 12:: shows an example of a layout of a field management unit with a field management sub-unit comprising blocks that comprise plots;
- Fig. 13:: shows a schematic representation of a field management unit and two isolation areas;
- Fig. 14:: shows a preferred example of a base station for a real-time kinematic (RTK) positioning system;
- Fig. 15:: shows a further preferred example of a base station for a real-time kinematic (RTK) positioning system;
- Fig. 16:: shows the results of a first experiment herein referred to as Experiment 1: Base - Rover approach;
- Fig. 17:: shows the results of a first experiment herein referred to as Experiment 2: Cube only experiment;
- Fig. 18:: shows a schematic representation of an example of a method for calibrating a base station for use in a real-time kinematic (RTK) positioning system with one or more rover units;
- Fig. 19:: shows a schematic representation of an example of a method for operating a real-time kinematic (RTK) positioning system with a base station and one or more rover units;
- Fig. 20a:: shows an example of an agricultural machine comprising a rover unit, wherein the agricultural machine moves on a field to place planting material;
- Fig. 20b:: shows an example of an agricultural machine comprising a rover unit, wherein the agricultural machine moves on a field to place planting material and wherein a base station is arranged on the agricultural machine;
- Fig. 21a:: shows an example of an agricultural machine comprising a rover unit, wherein the agricultural machine moves on a field to place stecklings in an automated process;
- Fig. 21b:: shows an example of an agricultural machine comprising a rover unit, wherein the agricultural machine moves on a field to place stecklings and wherein a base station is arranged on the agricultural machine in an automated process;
- Fig. 22a:: shows an example of an agricultural machine comprising a rover unit, wherein the agricultural machine moves on a field to place stecklings in a semi-automated process;
- Fig. 22b:: shows an example of an agricultural machine comprising a rover unit, wherein the agricultural machine moves on a field to place stecklings in a manual process;
- Fig. 23:: shows a top view of an example of a field management sub-unit with an agricultural machine that places planting material in the field management sub-unit;
- Fig. 24:: shows a top view of an example of a field management sub-unit with an agricultural machine that places planting material in the field management sub-unit, wherein a base station is arranged on the agricultural machine;
- Fig. 25:: shows a schematic representation of an example of a method for placing planting material in a georeferenced field management unit.

In the figures, elements with the same or comparable functions are indicated with the same reference numerals.

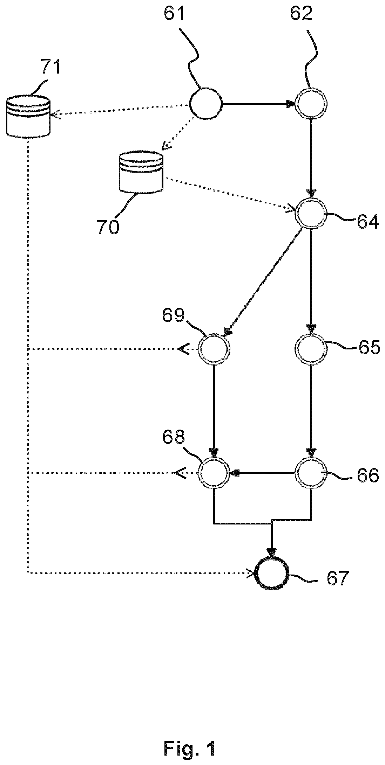

Fig. 1 shows a schematic workflow of an example of a method for managing agricultural processes. Seed production fields and accompanying data 61 such as documentation, history, isolation distances, is stored in a geospatial database 71. In particular, the georeferenced boundaries of field management units and field management sub-units are stored in the geospatial database 71, which is connected to a geographic information system (GIS)Web server. Seed/plant production fields and accompanying data 61 such as documentation, history, isolation distances, are additionally stored in a plant characteristics database 70, which can also be referred to as a breeding database and/or a production database. A selection 62 of one or two or more field management units is carried out to make sure that a field management unit is selected, which complies with certain predetermined requirements. The selection 62 comprises a quality management system applied to seed/plant production, preferably using Excellence Through Stewardship (ETS) compliance data. A creation 64 of a layout of a field management unit is performed by using a plotter module that includes a plotter algorithm. The plotter algorithm is adapted to use a combination of user defined inputs, such as and not limited to plot length/width, number of rows, number of seeds, number of plots and the selected layout templates, and automatically generates plot layouts. The plotter module may provide for a striping tool to geospatially plan a layout specifically for cuttings, such as but not limited to stecklings. The created layouts 69 with for example blocks and plots are saved in the geospatial database 71. With the creation 64 of a layout of a field management unit, placing 65 planting material in the field management unit can be carried out comprising reading out plant characteristics by scanning a machine-readable code. Scanning the machine-readable code can be carried out using a for example a smartphone. Reading out plant characteristics in such a way is particularly advantageous, as it prevents errors when reading out the plant characteristics. Documentation 66 of site characteristics such as, but not limited to, treatment with chemicals and/or fertilizer and/or irrigation weeding, harvest type, harvest priority, harvest results, harvest observation data, can be carried out. Further, generation 68 of plant observation and rating data comprising observation information can be carried out. Observation information may include but may not be limited to notes, manual entries, scores, ratings, such as cleaning, counting, damage, flowering, rouging, selection, general notes, photos, pictures, scans, sensor readings, plant height, plant damage, water content, sugar content, leaf size, leaf area, biomass, shape, plant habitus, stay green, snapping, weight, plant damage, disease monitoring (e.g. insect, spore traps), flowering, status, vigor, number of plants, invasive plants, bolters, environmental parameters, machine/implement recorded values. The generated plant observation and rating data is saved in the geospatial database 71. Finally, seed production mapping and dashboard visualization 67 can be carried out. Real time tracking information may be visualized in a dashboard, which provides various graphical and spatial visualizations of the complete seed production cycle.

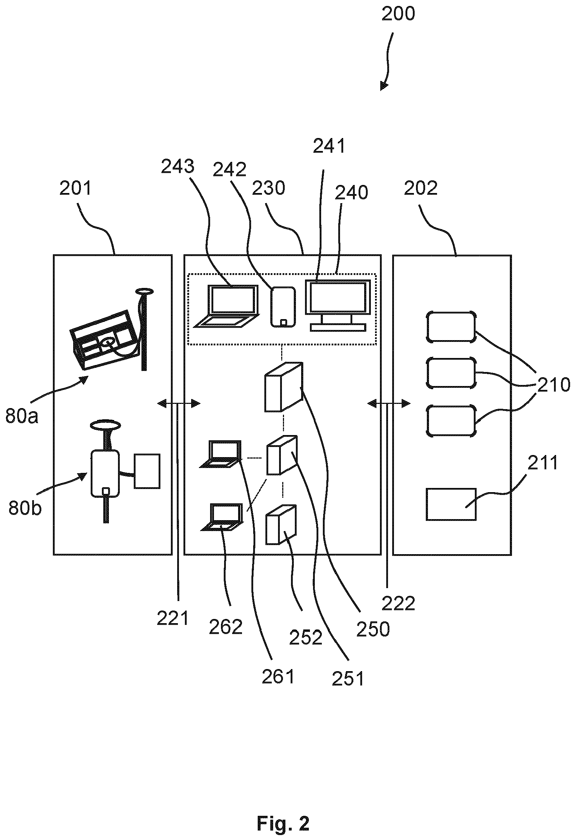

Fig. 2 shows a schematic overview of an example of a system 200 for managing agricultural processes. The system 200 comprises a database system 250, 251, 252 containing data relating to a field management unit. The system 200 further comprises sensor platforms each having a control unit. In this example, the sensor platforms are in the form of an agricultural machine 202 comprising steering systems 210 and implemented control 211. Further, mobile base stations 80a, 80b can be understood as sensor platforms each having at least one control unit.

As a mobile GNSS hardware 201 mobile base stations 80a, 80b for a real-time kinematic (RTK) positioning system can be used in a field management unit. With such a base station, it is possible to determine positions within a field management unit with an accuracy within the RTK-typical range, in particular of about +/- 2 to 3 cm. The mobile GNSS hardware 201 is adapted to be connected 221 to a GIS environment 230 to receive data therefrom and to transmit data thereto. Within the GIS environment 230, a GIS server architecture can comprise a platform 240 such as a desktop client 241, a smartphone 242, a laptop 243, connected to a web server 250 that is connected to a GIS server 251. The GIS server 251 is connected to a data server 252. The GIS server 251 can be accessed from desktop users 261 and GIS server administrators 262. An agricultural machine 202, in particular in a field management unit, can be connected 222 to the GIS environment 230. The agricultural machine 202 can comprise steering systems 210 and implemented control 211. Thus, for example it is possible to steer an agricultural machine according to a layout, wherein the data can be obtained from the GIS environment. Furthermore, data, for example including information on the placed planting material, can be sent from an agricultural machine to the GIS environment.

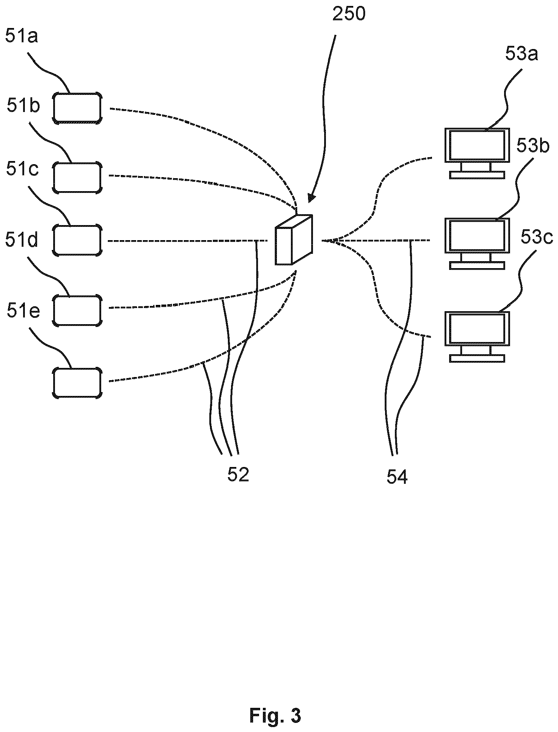

Fig. 3 shows an example of acquisition and organization of in field data. Mobile sensor platforms 51a-e, for example in the form or tablet computers, have a connection 52 to a web server 250 that is connected to a GIS server. The mobile sensor platforms 51a-e can receive data from the web server 250 and/or the GIS server and transmit data thereto.

Different users 53a-c have a connection 54 to the web server 250 that is connected to a GIS server. Therefore, it is possible to exchange data and information between all connected users and all connected mobile sensor platforms in the field management units.

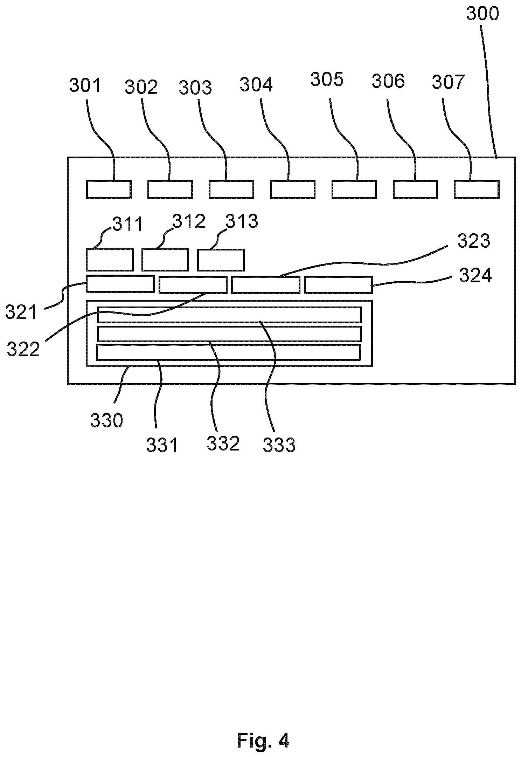

Fig. 4 shows a schematic representation of an example of a graphical user interface 300 used for a method for managing agricultural processes. It can be chosen to display the field 301 and in particular the field management unit, history 302, in particular field crop history, documents 303 with information attributed to the field management unit(s), exclusions 304, construct 305, map pins 306, and plotter 307, in particular comprising a plotter module. Here, history 302 is chosen and displayed. It is possible to add 311 an entry, to edit 312 an entry, and to delete 313 an entry. The information on history are shown in a table 330 that is organized in the columns year 321, previous field 322, previous crop 323, and remarks 324. The information for different years is displayed in the lines 331, 332, 333.

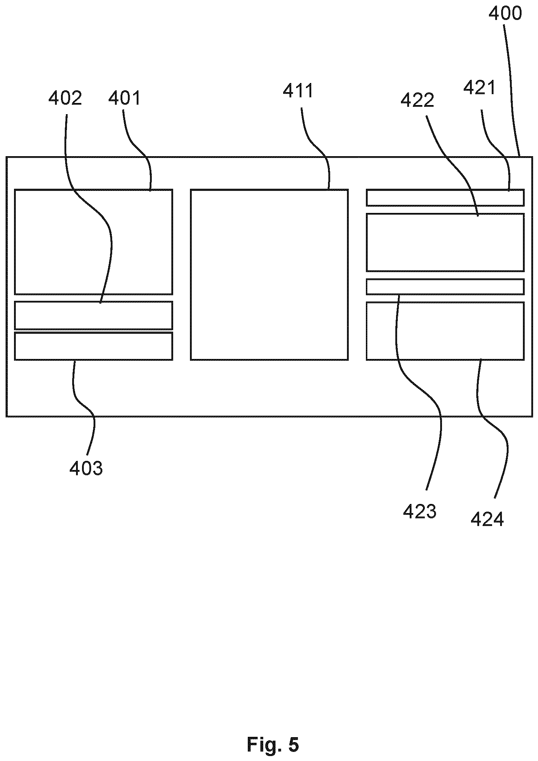

Fig. 5 shows a schematic representation of an example of a graphical user interface 400 used for a method for managing agricultural processes. In the left column the field summary 401 is displayed, including the total number of field management units and the total area of these field management units. In the field below, it can be displayed information about farmers or other site characteristics 402, wherein site characteristics can comprise one or several of the following group: crop sequence, field crop history, slope, surface conditions, soil information, breeder, treatment, harvest type, harvest priority, harvest results, harvest observation data, field name, farmer, trial number, trial class. In the field below, a layout 403 of a field management unit can be displayed. The column in the middle shows information obtained from at least one sensor 411, wherein the at least one sensor comprises one of the following group: environmental sensor, for example soil sensor and/ or soil water sensor, such as TDR and/or FDR and/or UMP, and/or GPR and/or EMI and/or ERT, preferably on-ground, weather sensor, for example weather station and/or sensor for weather data, phenotypical sensor, preferably on-ground and/or off-ground, for example RGB camera and/or thermal camera and/or hyperspectral camera and/or multispectral camera, position sensor: e.g. GNNS Gyroscope, EMU, potentiometers, machine sensor, for example machine parameter information and/or machine readings, such as speed and/or heading, preferably on-ground, mechanical, for example scales and/or seed counters identification sensor, for example scanner and/or NFC sensor and/or RFID sensor, optical sensor, for example LIDAR and/or light curtain and/or NIRS, radar sensor, for example imaging radar sensor, such as synthetic aperture radar. The column on the right displays plant characteristics 421 that can comprise one or several of the following group: year, crop, material group, variety name, variety type, variety traits, flowering categories, resistance, general vigor, pedigree, plant component information, crossing history, crossing locational history, in particular comprising place and/or time of crossing, male female lines, regulatory restrictions, component information, disease management information, risk management factors, genetic identification, randomization type, number of replications, number of entries, number of plants. In the field below, site characteristics 422 can be displayed, wherein the site characteristics can comprise one or several of the following group: crop sequence, field crop history, slope, surface conditions, soil information, breeder, treatment, harvest type, harvest priority, harvest results, harvest observation data, field name, farmer, trial number, trial class. In the field below, managing 423 can be displayed, wherein managing can comprise one or several of the following group: planning, administrating, performing maintenance work, inspecting, monitoring, documenting, analyzing, evaluating, visualizing. In the field below, an overview 424 of inspections and treatments can be displayed.

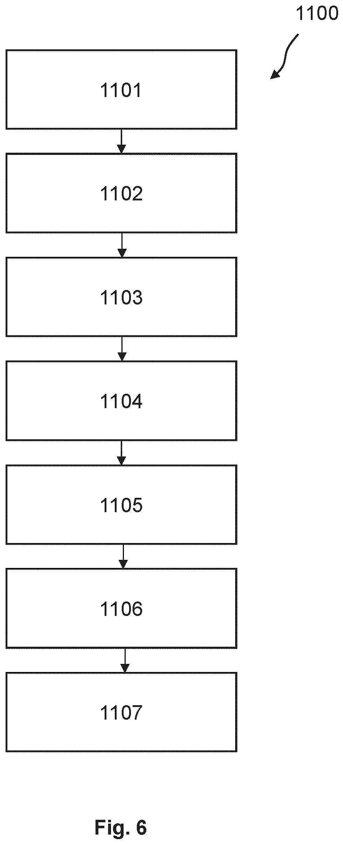

Fig. 6 shows a schematic representation of an example of a method 1100 for managing agricultural processes. The method 1100 comprises the steps described in the following. In a step 1101, creating a field management unit by defining georeferenced boundaries of the field management unit. In a step 1102, creating a layout of the field management unit by defining georeferenced field management sub-units within the field management unit. In a step 1103, storing the field management unit, including its boundaries and its field management sub-units, in a geospatial database provided on a server. In a step 1104, attributing site characteristics to the field management unit, in particular to the field management sub-units. In a step 1105, attributing plant characteristics to the field management unit, in particular to the field management sub-units. In a step 1106, exchanging data relating to the field management unit with at least one sensor platform. In a step 1107, performing a task by the at least one sensor platform depending on the data relating to the field management unit.

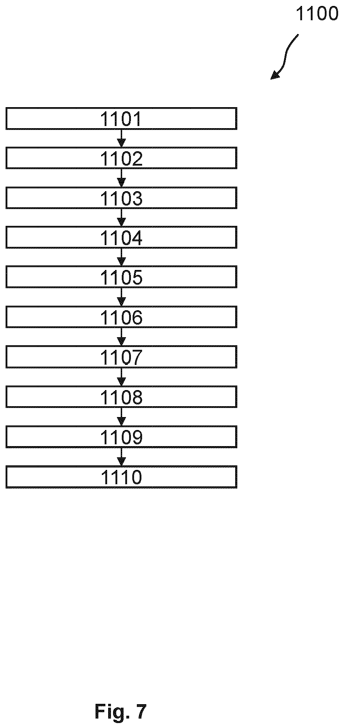

Fig. 7 shows a schematic representation of an example of a method 1100 for managing agricultural processes. The method 1100 comprises the steps described in Fig. 6 and the steps describes in following. In a step 1108, collecting data by the at least one sensor platform, preferably by at least one sensor of the sensor platform, and attributing the collected data to the field management unit, in particular to the field management sub-units. In a step 1109, selecting one out of two or more field management units based on site characteristics and/or plant characteristics attributed to the respective field management units and/or based on selection criteria. The steps of the method 1100 can be carried out for a plurality of field management units.

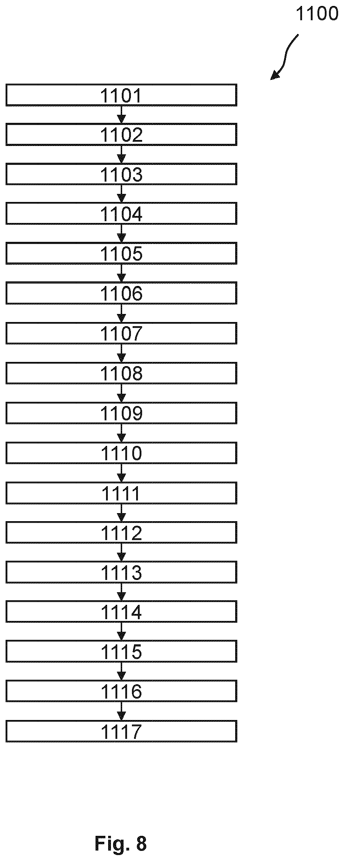

Fig. 8 shows a schematic representation of an example of a method 1100 for managing agricultural processes. The method 1100 comprises the steps described in Fig. 6 and in Fig. 7 and the steps describes in following. In a step 1110, attributing treatment information to the field management unit, in particular to the field management sub-units. In a step 1111, attributing observation information to the field management unit, in particular to the field management sub-units. In a step 1112, attributing effected planting information to the field management unit, in particular to the field management sub-units. In a step 1113, attributing harvest information to the field management unit, in particular to the field management sub-units. In a step 1114, attributing post-harvest information to the field management unit, in particular to the field management sub-units. In a step 1115, attributing administrative information to the field management unit, in particular to the field management sub-units. In a step 1116, attributing time information to the field management unit, in particular to the field management sub-units, and/or to the site characteristics and/or to the plant characteristics and/or to the treatment information and/or to the observation information and/or to the effected planting information and/or to the harvest information and/or to the post-harvest information and/or to the administrative information. In a step 1117, creating a georeferenced isolation area of the field management unit and storing the isolation area of the field management unit in the geospatial database, wherein preferably the isolation area is created by calculation of an outer boundary of the isolation area by adding at least one buffer distance to the boundaries of the field management unit in a direction pointing away from the field management unit, and/or by calculation of a distance between the field management unit and another field management unit or another isolation area, and/or by calculation of an inner boundary of the isolation area by adding at least one buffer distance from the boundaries of the field management unit in a direction pointing towards the field management unit.

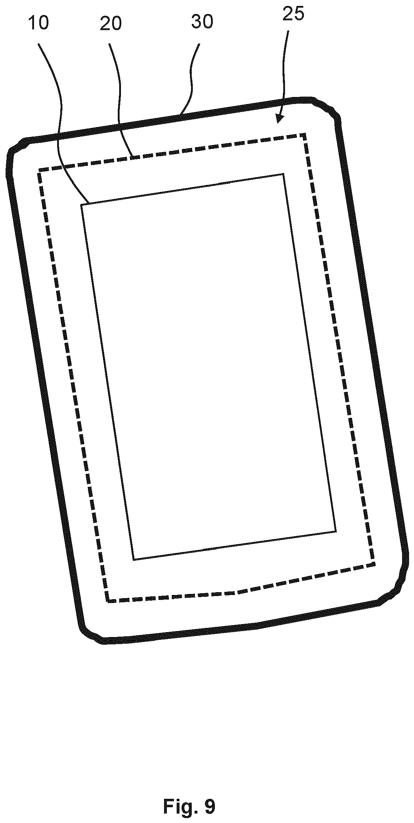

Fig. 9 shows an example of a field management unit 25 with a field management unit boundary 20 that defines the outer boundary of the field management unit. A field management sub-unit 10 is arranged within the field management unit. An isolation area is created by calculation of an outer boundary 30 of the isolation area by adding a buffer distance to the boundary 20 of the field management unit in a direction pointing away from the center of the field management unit. The isolation area can for example serve to ensure a minimal distance between the field management unit and restricted areas and/or to fulfil legal specifications with regard to minimal distances.

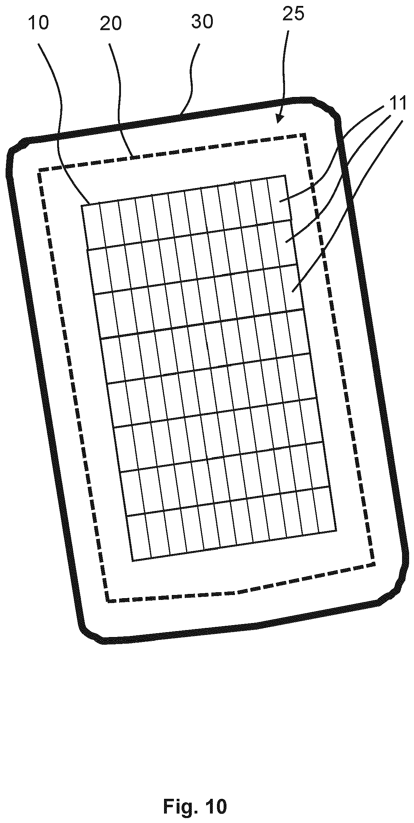

Fig. 10 shows an example of a layout of a field management unit 25 with field management unit boundary 20 that defines the outer boundary of the field management unit. A field management sub-unit 10 is arranged within the field management unit. An isolation area is created by calculation of an outer boundary 30 of the isolation area by adding a buffer distance to the boundary 20 of the field management unit in a direction pointing away from the center of the field management unit. The field management sub-unit 10 comprises several blocks 11. Here, the blocks 11 can represent an inner boundary of seed/plant production activities with a more specific location of the production within the field management unit.

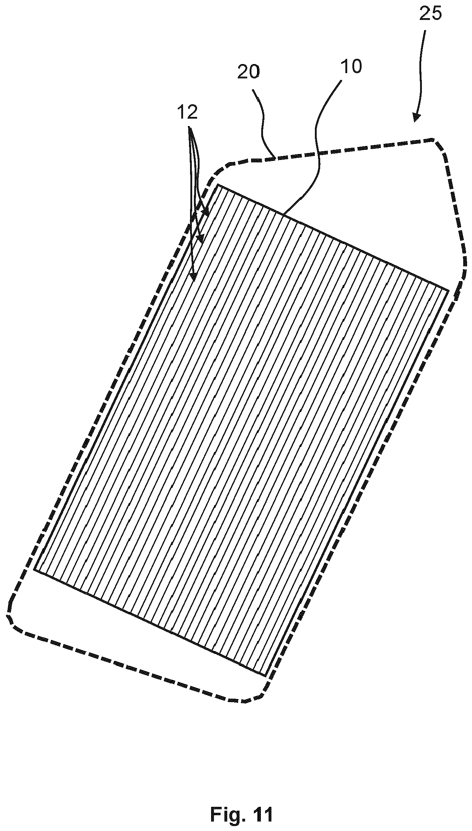

Fig. 11 shows an example of a layout of a field management unit 25 with a field management unit boundary 20 that defines the outer boundary of the field management unit. A field management sub-unit 10 is arranged within the field management unit. Within the field management sub-unit has a layout specifically for cuttings, such as but not limited to stecklings. This layout can be created by specifying striping parameters, such as but not limited to a planting machine and rows per stripe. Such a layout with stripes 12 can automatically be generated and mapped and the total available length of the stripes can be calculated.

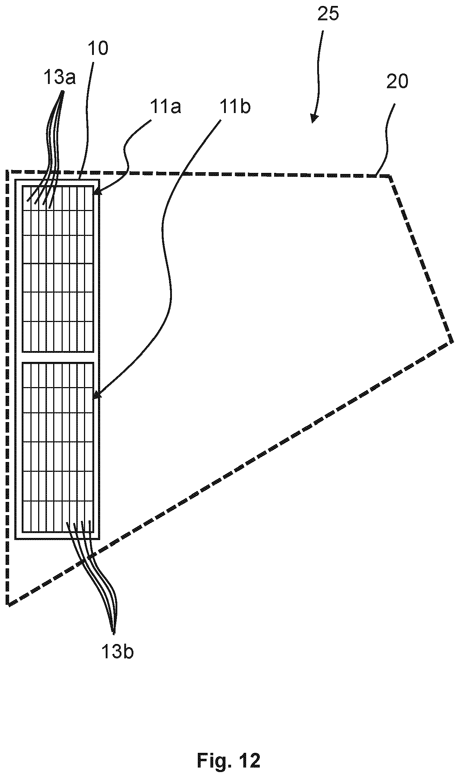

Fig. 12 shows an example of a layout of a field management unit 25 with a field management unit boundary 20 that defines the outer boundary of the field management unit. A field management sub-unit 10 is arranged within the field management unit 25. A first block 11a and a second block 11b are arranged within the field management sub-unit 10. The first block 11a comprises several plots 13a. The second block 11b comprises several plots 13b. Each of these plots can be an aggregation of planting material from one genotype. Each of the blocks can be an aggregation of plots with planting material from different genotypes.

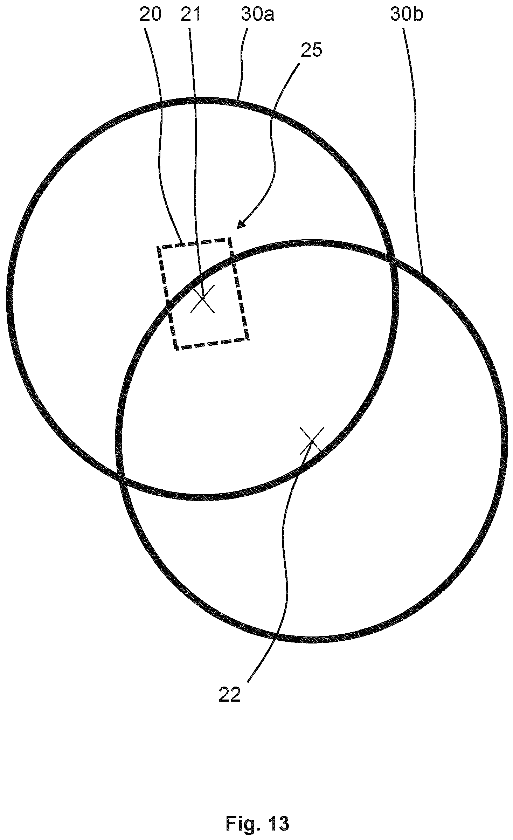

Fig. 13 shows an example of a field management unit 25 with a field management unit boundary 20 that defines the outer boundary of the field management unit. To ensure a minimal distance between the field management unit 25 and a potential new field management unit, isolation distances can be displayed. Therefore, a buffer distance is defined and a first pin 21 is placed. Here, the first pin 21 is located at the center of the field management unit 25. A first isolation area is created by calculation of an outer boundary 30a of the first isolation area by adding the buffer distance to the first pin 21. A second isolation area is created by calculation of an outer boundary 30b of the second isolation area by adding the buffer distance to a second pin 22. With the chosen buffer distance and the locations of the first pin 21 and the second pin 22, in this example a field management unit with a center at the location of pin 22 would be too close to the field management unit 25. A potential new field management unit should be placed with a larger distance to the field management 25.

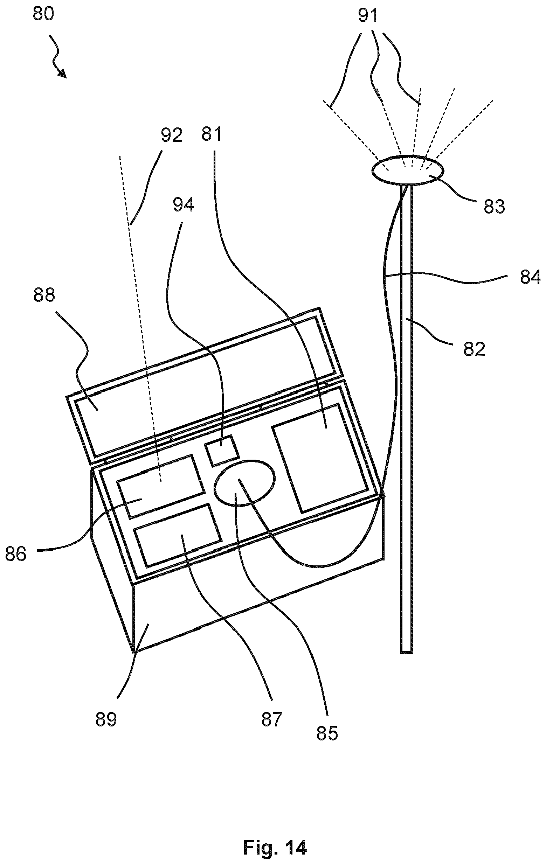

Fig. 14 shows a first preferred example of a base station 80 for a real-time kinematic (RTK) positioning system. The base station 80 comprises a global navigation satellite system (GNSS) receiver with a multiband antenna 83. The multiband antenna 83 is arranged on a holding device 82 that can be placed on the ground to position the multiband antenna 83 at a certain distance above the ground. The multiband antenna 83 is connected via a cable 84 to a GNSS module 85 that is arranged in a weather-proof casing 89 of the base station 80. The weather-proof casing 89 comprises a lid 88, whereby the weather-proof casing 89 can be closed and opened. The multiband antenna 83 is adapted to connect to a global navigation satellite system and receive position data 91 therefrom. The multiband antenna 83 is adapted to connect to two or more different systems, such as GPS, GLONASS, Galileo, BeiDou, and to receive position data 91 therefrom.

A further component of the base station 80 shown in Fig. 14 is the wireless LAN (WLAN) module 87. The WLAN module 87 is adapted for connecting to a WLAN hotspot in order to provide internet connectivity to the base station. Such a WLAN hotspot can for example be provided using a smartphone. To provide the base station 80 with energy, the base station comprises an accumulator 81 acting as an energy source. Furthermore, the base station comprises a control unit 94. The control unit 94 is adapted to operate the base station 80 in a rover mode. The base station 80 is stationary and does not move during operation in the rover mode. In the rover mode, the control unit 94 can receive correction data from an NTRIP server and determine several, for example 1000, rover positions based on the received NTRIP correction data. Then, the control unit 94 can determine an optimized position of the base station by averaging the determined several, for example 1000, rover positions. This optimized position has a very high accuracy and closely matches to the real, actual position of the base station. The base station further comprises a radio modem 86 as a transmission device to transmit correction data 92. When the optimized position of the base station 80 has been determined, correction data 92 can be transmitted from the base station 80 to the one or more rover units that allows the one or more rover unit to determine their respective positions with an accuracy within the RTK-typical range, in particular of about +/- 2 to 3 cm.

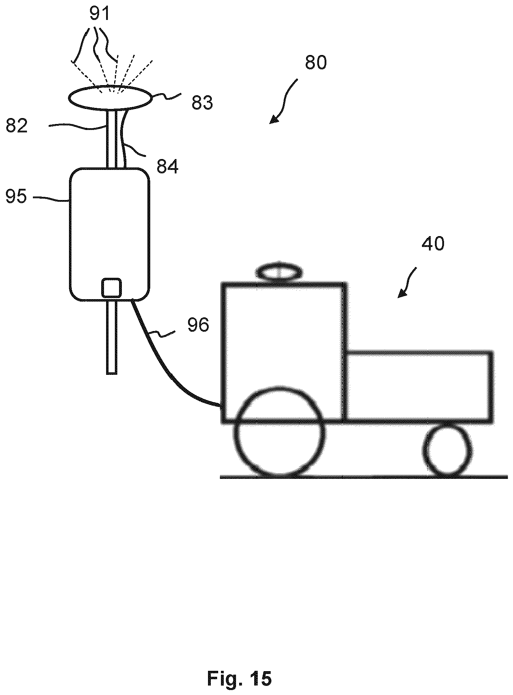

Fig. 15 shows a further preferred example of a base station 80 that is connected to an agricultural machine, for example a tractor 40, wherein the base station comprises an element 95, which can be, for example, a smartphone. The element 95 comprises a control unit, a WLAN module, and a transmission device. The element 95 is connected to a multiband antenna 83, wherein the multiband antenna 83 is arranged on a holding device 82 and connected to the element via a cable 84. The multiband antenna 83 is adapted to connect to a global navigation satellite system and receive position data 91 therefrom. The multiband antenna is adapted to connect to two or more different systems, such as GPS, GLONASS, Galileo, BeiDou, and to receive position data 91 therefrom. The WLAN module provides internet connectivity to the element 95. To provide the element 95 with energy, the element comprises an accumulator acting as an energy source. The control unit is adapted to operate the base station in a rover mode. The base station 80 is stationary and does not move during operation in the rover mode. In the rover mode, the control unit can receive correction data from an NTRIP server and determine several, for example 1000, rover positions based on the received NTRIP correction data. Then, the control unit can determine an optimized position of the base station by averaging the determined several, for example 1000, rover positions. This optimized position has a very high accuracy and closely matches to the real, actual position of the base station. When the optimized position of the base station 80 has been determined, correction data can be transmitted from the base station 80 to the one or more rover units, here an agricultural machine 40. The element 95 transmits the correction data via a USB cable 96 to the agricultural machine 40. The agricultural machine 40 can determine its respective position with an accuracy within the RTK-typical range, in particular of about +/- 2 to 3 cm.

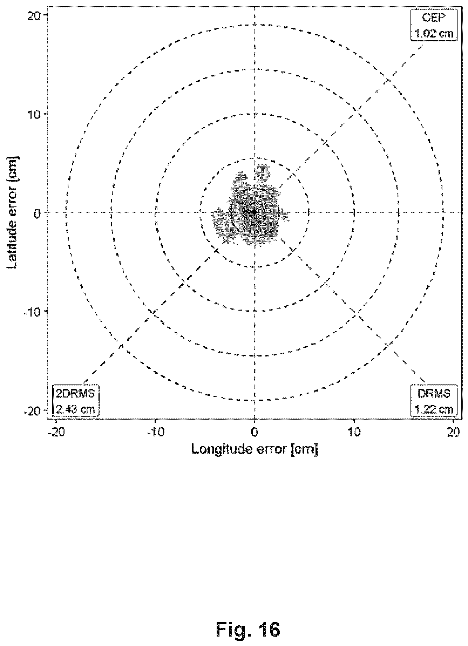

Fig. 16 shows the results of a first experiment herein referred to as Experiment 1: Base station - rover unit approach.

The position accuracy of each RTK-GNSS receiver was evaluated in static and longtime experiments at which the receiver, or its antenna, was placed above a geodetic reference point with known location.

In this experiment the base station was first operated in the rover mode and afterwards in the stationary mode.

In the rover mode the LTE-Gateway of the base station was used to receive its actual position using the average of 1,000 rover mode positions provided via NTRIP. In the stationary mode respective coordinates of an optimized position of the base station were then used to correct the incoming NMEA messages of the rover unit.

The relative position accuracy at the rover unit was quantified using standard measures such as the circular error probability (CEP), distance root mean square (DRMS), and twice the distance root mean square (2DRMS) which defines the radius of a circle in which 50 %, 63 %, and 98 % of the received coordinates were located.

The absolute position of the base station was evaluated by calculating the distance between the geodetic reference point with known location and all measured rover unit positions.

The statistical measures of a 16 h long base-rover experiment revealed a relative accuracy of 0.29 cm (CEP), 0.35 cm (DRMS), and 0.7 cm (2DRMS) while for the absolute accuracy the average offset to the geodetic reference point with known location was 1.27 cm with a max deviation of 2.94 cm.

Furthermore, the analysis indicated a stable connection between base station and rover unit.

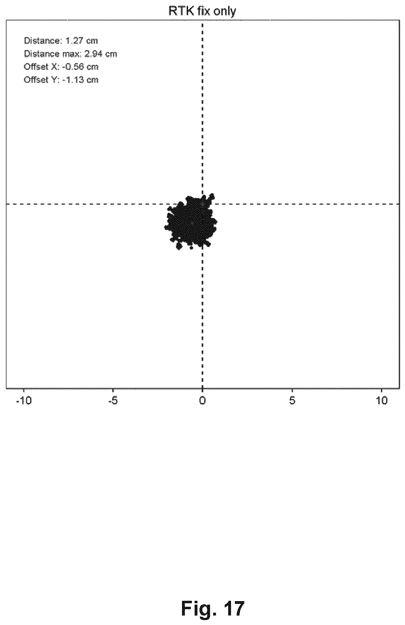

Fig. 17 shows the results of a first experiment herein referred to as Experiment 2: base station only experiment.

The position accuracy of each RTK-GNSS receiver was evaluated in static and longtime experiments at which the receiver, or its antenna, was placed above a geodetic reference point with known location.

During the base station only experiment the rover mode position was constantly corrected using NTRIP via LTE.

The static experiment at which the base station in the rover mode constantly received NTRIP correction signals over a period of 4 days showed that in less than 0.1 % of all measurements the correction signal was lost. CEP, DRMS, and 2DRMS were 1.02 cm, 1.22 cm, and 2.43 cm respectively as the absolute position accuracy was on average 2.57 cm.

The results of the static experiments indicate the high accuracy of both approaches operating the base station in a stationary mode as well as in a rover mode.

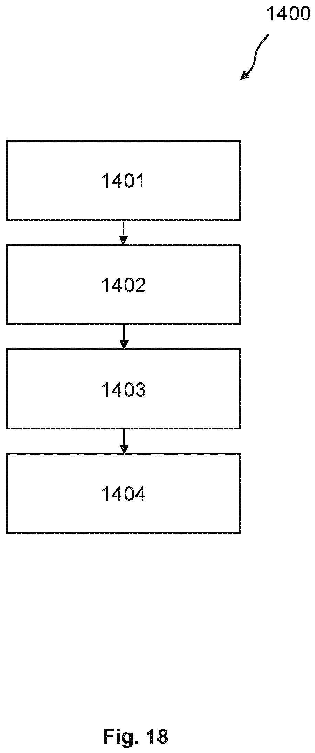

Fig. 18 shows a schematic of a method 1400 for calibrating a base station for use in a real-time kinematic (RTK) positioning system with one or more rover units. The method 1400 comprises the steps described in the following. In a step 1401, providing a base station with a global navigation satellite system (GNSS) receiver, a transmission device, a wireless LAN (WLAN) module. As base station, for example a base station as shown in Fig. 14 and/or Fig. 15 can be used. In a step 1402, operating the base station in a rover mode comprising receiving correction data from a Networked Transport of RTCM via Internet Protocol (NTRIP) server and determining two or more rover mode positions of the base station based on the received NTRIP correction data. In the rover mode, the base station is stationary and does not move. The base station can be operated in the rover mode for a predetermined period of time, for example between 5-10 minutes, and/or a predetermined number of rover mode positions, for example 1000 rover mode positions. In a step 1403, determining an optimized position of the base station by averaging the two or more, for example 1000, rover mode positions. Preferably, the method 1400 further comprises the step 1404 described in the following. In a step 1404, configuring the base station with regard to the length of a period for operation in the rover mode and/or with regard to a number of rover mode positions to be averaged.

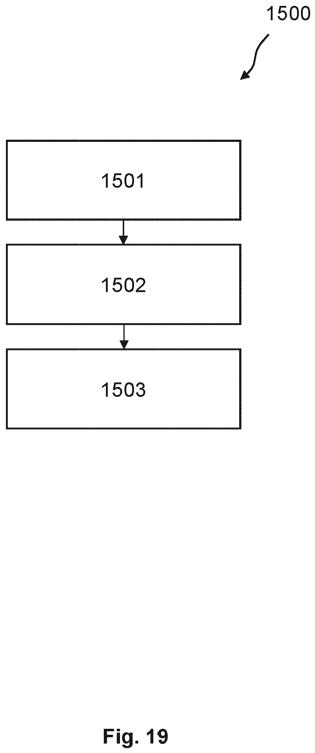

Fig. 19 shows a schematic of a method 1500 for operating a real-time kinematic (RTK) positioning system with a base station and one or more rover units. The method 1500 comprises the steps described in the following. In a step 1501, calibrating the base station. In a step 1502, operating the base station in a stationary mode using the optimized position. Preferably, the method 1500 further comprises the step described in the following. In a step 1503, transmitting correction data to the one or more rover units, preferably via the transmission device and/or preferably in a standardized correction data format according to the Radio Technical Commission for Maritime Services (RTCM).

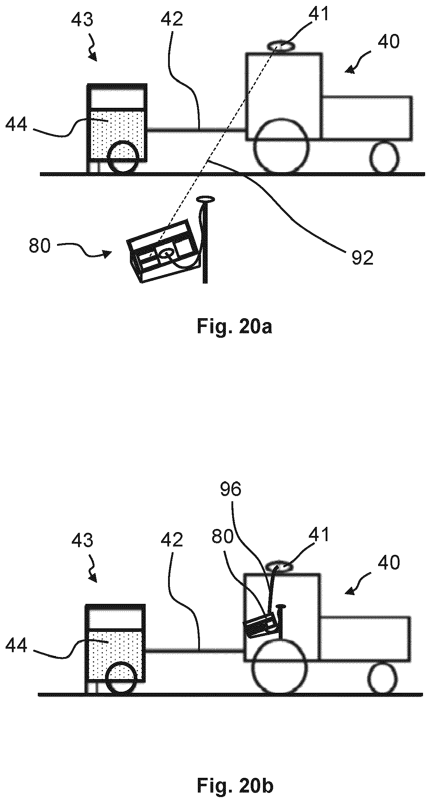

Fig. 20a shows an agricultural machine 40, here shown in form of a tractor, comprising a rover unit 41 that is arranged on the agricultural machine 40, wherein the agricultural machine 40 moves on a field to place planting material. A base station 80, for example a base station as shown in Fig. 14, is placed at the edge of the field. After placing the base station 80 at the edge of the field, it can be calibrated in a rover mode to determine its optimized position. After determination of the optimized position of the base station 80, the base station can switch to stationary mode, wherein the base station wirelessly transmits correction data 92 to the rover unit 41. With the received correction data 92 the position of the agricultural machine 40 can be determined accurately. A trailer 43 is connected to the agricultural machine 40 via a connection device 42. The trailer 43 comprises a container with planting material, in particular seeds 44. The seeds 44 are brought out using a dispenser, such that the seeds 44 are placed onto the field as previously planned. As it is possible to accurately determine the position of the agricultural machine 40 and/or the trailer 43, the planting material can be accurately placed in the field at the predetermined positions.

Fig. 20b shows an agricultural machine 40, here shown in form of a tractor, comprising a rover unit 41 that is arranged on the agricultural machine 40, wherein the agricultural machine 40 can move on a field to place planting material. A base station 80, for example a base station as shown in Fig. 14 or as shown in Fig. 15, is also arranged on the agricultural machine 40. The base station 80 can be calibrated in a rover mode to determine its optimized position. In this example, in the rover mode the base station 80 and the agricultural machine 40 are stationary and do not move. After determination of the optimized position of the base station 80, the base station can switch to stationary mode, wherein the base station transmits correction data to the rover unit 41 via a USB cable 96. With the received correction data the position of the agricultural machine 40 can be determined accurately. A trailer 43 is connected to the agricultural machine 40 via a connection device 42. The trailer 43 comprises a container with planting material, in particular seeds 44. The seeds 44 are brought out using a dispenser, such that the seeds 44 are placed onto the field as previously planned. As it is possible to accurately determine the position of the agricultural machine 40 and/or the trailer 43, the planting material can be accurately placed in the field at the predetermined positions.

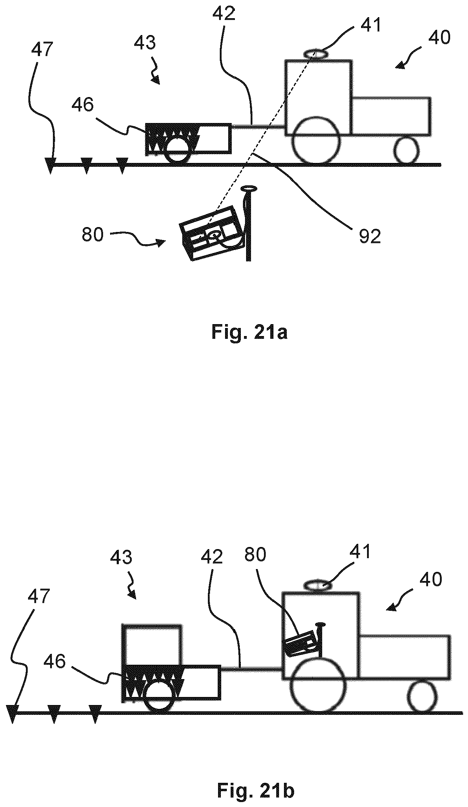

Fig. 21a shows an agricultural machine 40, here shown in form of a tractor, comprising a rover unit 41 that is arranged on the agricultural machine 40, wherein the agricultural machine 40 moves on a field to place planting material. A base station 80, for example a base station as shown in Fig. 14, is placed at the edge of the field. After placing the base station 80 at the edge of the field, it can be calibrated in a rover mode to determine its optimized position. After determination of the optimized position of the base station 80, the base station can switch to stationary mode, wherein the base station wirelessly transmits correction data 92 to the rover unit 41. With the received correction data 92 the position of the agricultural machine 40 can be determined accurately. A trailer 43 is connected to the agricultural machine 40 via a connection device 42. The trailer 43 comprises a container with planting material, here shown in form of stecklings 46. The stecklings 46 are placed using an automated process, such that the stecklings 46 are placed onto the field as previously planned using a planting automat. The planting automat is adapted to place stecklings without any person performing the actual placing of the stecklings. As it is possible to accurately determine the position of the agricultural machine 40 and/or the trailer 43, the planting material, in particular the stecklings, can be accurately placed in the field at the predetermined positions. Then, the placed stecklings 47 are arranged on the field at their predetermined position.

Fig. 21b shows an agricultural machine 40, here shown in form of a tractor, comprising a rover unit 41 that is arranged on the agricultural machine 40, wherein the agricultural machine 40 can move on a field to place planting material. A base station 80, for example a base station as shown in Fig. 14 or as shown in Fig. 15, is also arranged on the agricultural machine 40. The base station 80 can be calibrated in a rover mode to determine its optimized position. In this example, in the rover mode the base station 80 and the agricultural machine 40 are stationary and do not move. After determination of the optimized position of the base station 80, the base station can switch to stationary mode, wherein the base station transmits correction data to the rover unit 41 via a USB cable 96. With the received correction data the position of the agricultural machine 40 can be determined accurately. A trailer 43 is connected to the agricultural machine 40 via a connection device 42. The trailer 43 comprises a container with planting material, here shown in form of stecklings 46. The stecklings 46 are placed using an automated process, such that the stecklings 46 are placed onto the field as previously planned using a planting automat. The planting automat is adapted to place stecklings without any person performing the actual placing of the stecklings. As it is possible to accurately determine the position of the agricultural machine 40 and/or the trailer 43, the planting material, in particular the stecklings, can be accurately placed in the field at the predetermined positions. Then, the placed stecklings 47 are arranged on the field at their predetermined position.

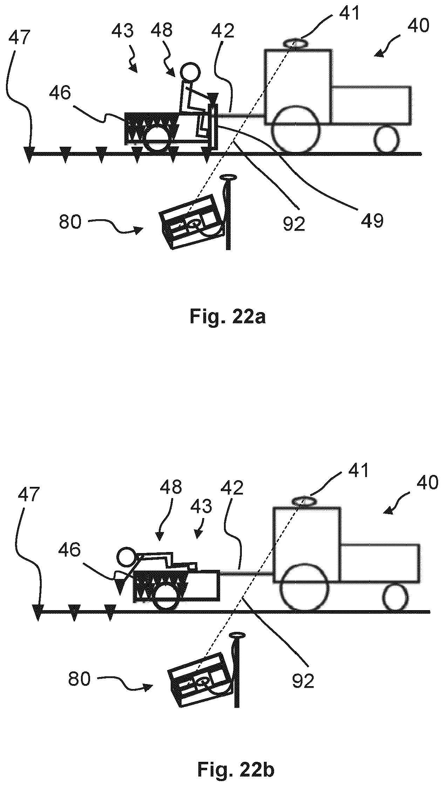

Fig. 22a shows an agricultural machine 40, here shown in form of a tractor, comprising a rover unit 41 that is arranged on the agricultural machine 40, wherein the agricultural machine 40 moves on a field to place stecklings. A base station 80, for example a base station as shown in Fig. 14, is placed at the edge of the field. After placing the base station 80 at the edge of the field, it can be calibrated in a rover mode to determine its optimized position. After determination of the optimized position of the base station 80, the base station can switch to stationary mode, wherein the base station wirelessly transmits correction data 92 to the rover unit 41. With the received correction data 92 the position of the agricultural machine 40 can be determined accurately. A trailer 43 is connected to the agricultural machine 40 via a connection device 42. The trailer 43 comprises a container with planting material, here shown in form of stecklings 46. The stecklings 46 are placed within a semi-automated process, wherein a person 48 on the trailer 43 controls the placing of the planting material by using a planting device 49 that is adapted to place the stecklings, such that the stecklings 46 are placed onto the field as previously planned. As it is possible to accurately determine the position of the agricultural machine 40 and/or the trailer 43, the planting material, in particular the stecklings, can be accurately placed in the field at the predetermined positions. Then, the placed stecklings 47 are arranged on the field at their predetermined position. The semi-automated process shown in Fig. 22a can also be carried out by using a base station 80 that is arranged on the agricultural machine 40, as shown in Fig. 21b.

Fig. 22b shows an agricultural machine 40, here shown in form of a tractor, comprising a rover unit 41 that is arranged on the agricultural machine 40, wherein the agricultural machine 40 moves on a field to place stecklings. A base station 80, for example a base station as shown in Fig. 14, is placed at the edge of the field. After placing the base station 80 at the edge of the field, it can be calibrated in a rover mode to determine its optimized position. After determination of the optimized position of the base station 80, the base station can switch to stationary mode, wherein the base station wirelessly transmits correction data 92 to the rover unit 41. With the received correction data 92 the position of the agricultural machine 40 can be determined accurately. A trailer 43 is connected to the agricultural machine 40 via a connection device 42. The trailer 43 comprises a container with planting material, here shown in form of stecklings 46. The stecklings 46 are placed within a manual process, wherein a person 48 on the trailer 43 performs the placing of the planting material by hand to place the stecklings, such that the stecklings 46 are placed onto the field as previously planned. As it is possible to accurately determine the position of the agricultural machine 40 and/or the trailer 43, the planting material, in particular the stecklings, can be accurately placed in the field at the predetermined positions. Then, the placed stecklings 47 are arranged on the field at their predetermined position. The manual process shown in Fig. 22b can also be carried out by using a base station 80 that is arranged on the agricultural machine 40, as shown in Fig. 21b.

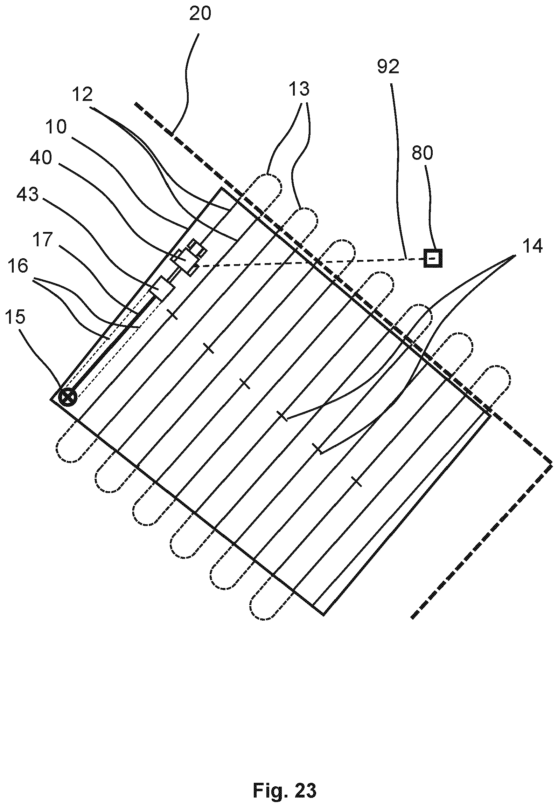

Fig. 23 shows a top view of an agricultural machine 40 on a field management unit, wherein a part of the field management unit boundary 20 is shown. A field management sub-unit 10 is arranged within the field management unit. The agricultural machine 40 comprises a rover unit that is adapted to receive correction data 92 from a base station 80 that is arranged next to the field management unit. By receiving the correction data 92, the position of the agricultural machine 40 and the position of the trailer 43 that is connected to the agricultural machine can be determined accurately. Within the field management sub-unit 10, parallel navigation lines 12, 13 are arranged that comprise information for the movement of the agricultural machine 40 in the field management sub-unit 10. Within the field management sub-unit 10, the agricultural machine 40 starts at a starting point 15 and moves along the navigation lines 12. The route covered 17 is recorded. Furthermore, the positions 16 of the placed planting material is recorded. Marks 14 are defined within the field management sub-unit 10. At each mark 14 the plant characteristics of the planting material to be placed is defined. Thereby, within the field management sub-unit 10 planting materials with different plant characteristics can be placed.

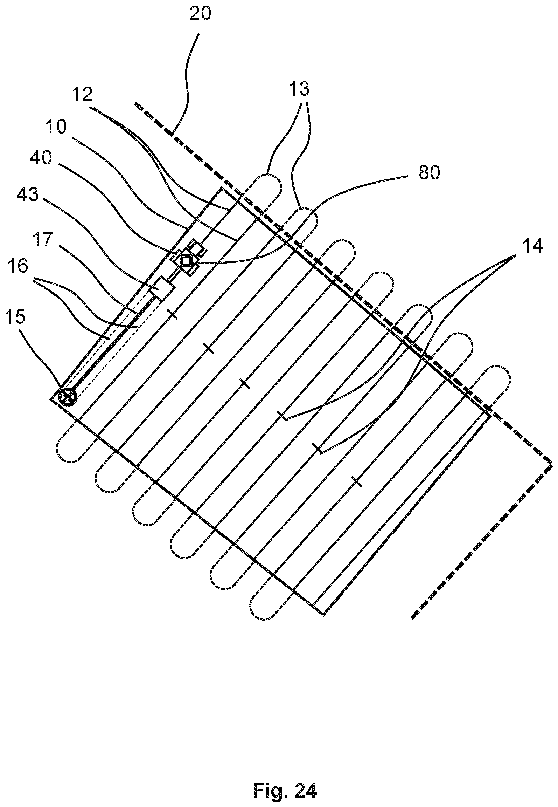

Fig. 24 shows a top view of an agricultural machine 40 on a field management unit, wherein a part of the field management unit boundary 20 unit is shown. A field management sub-unit 10 is arranged within the field management unit. The agricultural machine 40 comprises a rover unit that is adapted to receive correction data from a base station 80 that is on the agricultural machine 40. By receiving the correction data, the position of the agricultural machine 40 and the position of the trailer 43 that is connected to the agricultural machine can be determined accurately. Within the field management sub-unit 10, parallel navigation lines 12, 13 are arranged that comprise information for the movement of the agricultural machine 40 in the field management sub-unit 10. Within the field management sub-unit 10, the agricultural machine 40 starts at a starting point 15 and moves along the navigation lines 12. The route covered 17 is recorded. Furthermore, the positions 16 of the placed planting material is recorded. Marks 14 are defined within the field management sub-unit 10. At each mark 14 the plant characteristics of the planting material to be placed is defined. Thereby, within the field management sub-unit 10 planting materials with different plant characteristics can be placed.

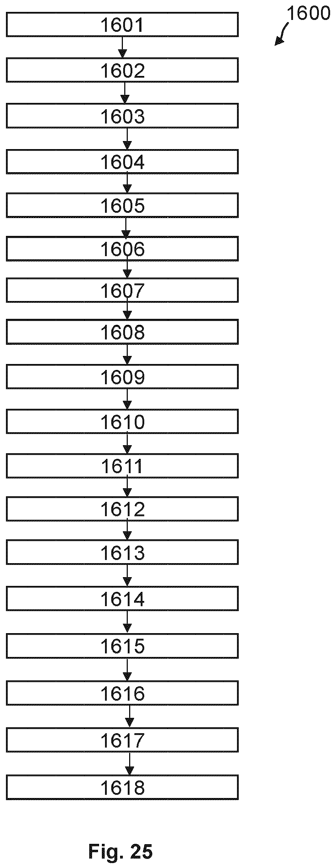

Fig. 25 shows a schematic of a method 1600 for placing planting material, in particular seeds and/or cuttings and/or young plants and/or tubers and/or bulbs and/or grafts, in a georeferenced field management unit. The method 1600 comprises the steps described in the following. In a step 1601, providing an agricultural machine, in particular a planter. In a step 1602, receiving, preferably from a database system, data relating to the field management unit, the data including georeferenced boundaries of the field management unit, a layout of the field management unit defining georeferenced field management sub-units within the field management unit, site characteristics attributed to the field management unit, in particular to the field management sub-units. In a step 1603, providing planting material, including plant characteristics attributed to the planting material. In a step 1604, placing the planting material in the field management unit, in particular in the field management sub-units, with the agricultural machine, according to the data relating to the field management unit. In a step 1606, georeferencing the position of the placed planting material, including plant characteristics attributed to the planting material, in the field management unit, in particular in the field management sub-units. Preferably, the method 1600 further comprises the steps described in the following. In a step 1607, storing and/or transmitting, preferably to a database system, the position of the placed planting material, including plant characteristics attributed to the planting material. In a step 1608, providing a container with planting material. In a step 1609, recording the plant characteristics attributed to the planting material contained in the container. In a step 1610, when all of the planting material contained in the container has been placed, providing a new container with planting material. In a step 1611, recording the plant characteristics attributed to the planting material contained in the new container. In a step 1612, comparing the recorded plant characteristics attributed to the planting material contained in the container with the plant characteristics attributed to the field management unit, in particular the field management sub-units. In a step 1613, when the recorded plant characteristics attributed to the planting material contained in the container and the plant characteristics attributed to the field management unit, in particular the field management sub-units, do not match, issuing a warning notification. In a step 1614, generating recorded field management units, in particular field management sub-units, with the recorded plant characteristics attributed thereto. In a step 1615, attributing the recorded plant characteristics to the field management units, in particular field management sub-units. In a step 1616, recording sensor information, in particular weather information and/or environmental conditions information and/or field conditions information, preferably comprising information about temperature and/or humidity and/or soil moisture content. In a step 1617, attributing the recorded sensor information to the field management units, in particular field management sub-units. In a step 1618, recording a position of a single planting material, in particular a single seed and/or cutting and/ or young plant and/or tuber and/or bulb and/or graft, preferably by using information from a locating sensor, wherein the locating sensor is arranged on the agricultural machine.

## Claims

1. A method for managing agricultural processes, comprising
- creating a field management unit by defining georeferenced boundaries of the field management unit,
- creating a layout of the field management unit by defining georeferenced field management sub-units within the field management unit,
- storing the field management unit, including its boundaries and its field management sub-units, in a geospatial database provided on a server,
- attributing site characteristics to the field management unit, in particular to the field management sub-units,
- attributing plant characteristics to the field management unit, in particular to the field management sub-units,
- exchanging data relating to the field management unit with at least one sensor platform,
- performing a task by the at least one sensor platform depending on the data relating to the field management unit.

2. The method according to the preceding claim, comprising
- collecting data by the at least one sensor platform, preferably by at least one sensor of the sensor platform, and attributing the collected data to the field management unit, in particular to the field management sub-units, and/or
- selecting one out of two or more field management units based on site characteristics and/or plant characteristics attributed to the respective field management units and/or based on selection criteria.

3. The method according to at least one of the preceding claims, wherein the steps are carried out for a plurality of field management units.

4. The method according to at least one of the preceding claims, comprising
- attributing treatment information to the field management unit, in particular to the field management sub-units, and/or
- attributing observation information to the field management unit, in particular to the field management sub-units, and/or
- attributing effected planting information to the field management unit, in particular to the field management sub-units, and/or
- attributing harvest information to the field management unit, in particular to the field management sub-units, and/or
- attributing post-harvest information to the field management unit, in particular to the field management sub-units, and/or
- attributing administrative information to the field management unit, in particular to the field management sub-units.

5. The method according to at least one of the preceding claims, comprising
- attributing time information to the field management unit, in particular to the field management sub-units, and/or to the site characteristics and/or to the plant characteristics and/or to the treatment information and/or to the observation information and/or to the effected planting information and/or to the harvest information and/or to the post-harvest information and/or to the administrative information.

6. The method according to at least one of the preceding claims, comprising
- creating a georeferenced isolation area of the field management unit and storing the isolation area of the field management unit in the geospatial database, wherein preferably the isolation area is created
- by calculation of an outer boundary of the isolation area by adding at least one buffer distance to the boundaries of the field management unit in a direction pointing away from the field management unit, and/or
- by calculation of a distance between the field management unit and another field management unit or another isolation area, and/or
- by calculation of an inner boundary of the isolation area by adding at least one buffer distance from the boundaries of the field management unit in a direction pointing towards the field management unit.

7. The method according to at least one of the preceding claims, wherein
- the field management unit comprises a polygon and/or
- at least one of the field management sub-units, several of the field management sub-units or all of the field management sub-units comprise polygons, and/or
- at least one of the field management sub-units, several of the field management sub-units or all of the field management sub-units comprise point coordinates.

8. The method according to at least one of the preceding claims,
wherein the at least one sensor platform comprises a mobile sensor platform, and preferably comprises one or several of the following group:
- a (smart) phone,
- a tablet,
- a mobile computer,
- a wearable computer, in particular a smartwatch and/or hands free device, such as smart glasses,
- an unmanned autonomous vehicle, in particular ground-borne and/or airborne, for example a field robot and/or a drone,
- an agricultural machine, such as a tractor and/or a planter and/or a harvester and/or a sprayer,
- a helicopter,
- an airplane,
- a non-geostationary satellite,
and/or wherein the at least one sensor platform comprises a stationary sensor platform, and preferably comprises one or several of the following group:
- a weather station,
- a stationary sensor,
- a stationary measuring device,
- a geostationary satellite.

9. The method according to at least one of the preceding claims,
wherein managing can comprise one or several of the following group:
- planning,
- administrating,
- performing maintenance work,
- inspecting,
- monitoring,
- documenting,
- analyzing,
- evaluating,
- visualizing,
and/or wherein agricultural processes can comprise one or several of the following group:
- placing planting material, such as, but not limited to sowing seeds and/or placing and young plants and/or cuttings and/or bulbs and/or tubers and/or grafts,
- transplanting planting material, such as, but not limited to young plants and/or cuttings and/or bulbs and/or tubers and/or grafts,
- singling planting material, such as, but not limited to young plants and/or cuttings and/or bulbs and/or tubers and/or grafts,
- topping planting material, such as, but not limited to young plants and/or cuttings and/or bulbs and/or tubers and/or grafts,
- collecting plant samples,
- harvesting,
- inspecting,
- pollination,
- treatment with chemicals and/or fertilizer and/or irrigation,
- weeding, in particular mechanical weeding,
- phenotyping.

10. The method according to at least one of the preceding claims,
wherein the field management sub-units can comprise one or several of the following group:
- blocks,
- plots,
- stripes,
- rows,
- sowing lines,
- point locations, in particular of individual plant material,
and/or
wherein the site characteristics can comprise one or several of the following group:
- crop sequence,
- field crop history,
- slope,
- surface conditions,
- soil information,
- breeder,
- treatment,
- harvest type,
- harvest priority,
- harvest results,
- harvest observation data,
- field name,
- farmer,
- trial number,
- trial class,
and/or wherein the plant characteristics can comprise one or several of the following group:
- year,
- crop,
- material group,
- variety name,
- variety type,
- variety traits,
- flowering categories,
- resistance,
- general vigor,
- pedigree,
- plant component information,
- crossing history,
- crossing locational history, in particular comprising place and/or time of crossing,
- male female lines,
- regulatory restrictions,
- component information,
- disease management information,
- risk management factors,
- genetic identification,
- randomization type,
- number of replications,
- number of entries,
- number of plants.

11. The method according to at least one of the preceding claims, wherein the at least one sensor platform comprises at least one sensor, wherein preferably the at least one sensor comprises one or several of the following group:
- environmental sensor, for example soil sensor and/ or soil water sensor, such as TDR and/or FDR and/or UMP, and/or GPR and/or EMI and/or ERT, preferably on-ground,
- weather sensor, for example weather station and/or sensor for weather data,
- phenotypical sensor, preferably on-ground and/or off-ground, for example RGB camera and/or thermal camera and/or hyperspectral camera and/or multispectral camera,
- position sensor: e.g. GNNS Gyroscope, EMU, potentiometers
- machine sensor, for example machine parameter information and/or machine readings, such as speed and/or heading, preferably on-ground,
- mechanical, for example scales and/or seed counters
- identification sensor, for example scanner and/or NFC sensor and/or RFID sensor,
- optical sensor, for example LIDAR and/or light curtain and/or NIRS,
- radar sensor, for example imaging radar sensor, such as synthetic aperture radar.

12. The method according to at least one of the preceding claims, wherein the geospatial database is part of a database system comprising one or more further databases, wherein preferably a data connection within the database system and/or between the geospatial database and one or more of the further databases of the database system and/or between the at least one sensor platform and the database system, in particular one or more of its databases, is a direct and/or indirect data connection.

13. A system for managing agricultural processes, comprising
- a database system containing data relating to a field management unit, the data including
∘ georeferenced boundaries of the field management unit,
∘ a layout of the field management unit defining georeferenced field management sub-units within the field management unit,
∘ site characteristics attributed to the field management unit, in particular to the field management sub-units,
∘ plant characteristics to the field management unit, in particular to the field management sub-units,
- at least one sensor platform with a control unit,
- wherein the control unit is adapted to receive data relating to the field management unit from the database system, and
- wherein the control unit is adapted to initiate the performing of a task by the at least one sensor platform depending on the data relating to the field management unit.

14. A computer program comprising program commands for performing a method according to at least one of the preceding claims 1-12.

15. A computer program product comprising computer-readable instructions that, when loaded and run on a computer, cause the computer to perform a method according to at least one of the preceding claims 1-12.
